# EUROPEAN PATENT APPLICATION

(11) **EP 4 557 695 A1**
(43) Date of publication of application: **21.05.2025**
(21) Application number: 23851495.4
(22) Date of filing: 30.06.2023
(51) Int. Cl.: H04L 47/263

(54) **COMMUNICATION METHOD, RELATED APPARATUS AND COMPUTER-READABLE STORAGE MEDIUM**

(30) Priority: 09.08.2022 CN 202210952392
(71) Applicant: Huawei Technologies Co., Ltd., Shenzhen, Guangdong 518129 (CN)
(72) Inventor: LI, Rixin, Shenzhen, Guangdong 518129 (CN); QI, Yunlei, Shenzhen, Guangdong 518129 (CN); LI, Weiwei, Shenzhen, Guangdong 518129 (CN)
(74) Representative: Maiwald GmbH
(86) International application number: PCT/CN2023/105316
(87) International publication number: WO 2024/032269

(57) **Abstract**

This application provides a communication method, a related apparatus, and a computer-readable storage medium. The method includes: A first communication apparatus receives a first CBR service, generates, based on the first CBR service, a first block sequence carrying the first CBR service, and then sends the first block sequence to a second communication apparatus. The first block sequence includes a first start block, M first data blocks, and a first termination block, the first block sequence includes first indication information and a first padding area, the first indication information indicates that no CBR service data is padded in the first padding area, the first CBR service is not padded in the first padding area, and a length of the first padding area is less than a length of the first data block, where M is a positive integer. The method can decrease a delay and a jitter for processing the CBR service by the communication apparatus, and improve performance of the communication apparatus.

## Description

This application claims priority to Chinese Patent Application No. 202210952392.6, filed with the China National Intellectual Property Administration on August 9, 2022 and entitled "COMMUNICATION METHOD, RELATED APPARATUS, AND COMPUTER-READABLE STORAGE MEDIUM", which is incorporated herein by reference in its entirety.

### TECHNICAL FIELD

This application relates to the field of Internet technologies, and in particular, to a communication method, a related apparatus, and a computer-readable storage medium.

### BACKGROUND

In a transport network, constant bit rate (constant bit rate, CBR) services such as a common public radio interface (common public radio interface, CPRI) service and a synchronous digital hierarchy (synchronous digital hierarchy, SDH) service have rate adaptation requirements. For example, when a rate at which a communication apparatus (for example, a network device) sends a CBR service is greater than, for a long period of time, a rate at which the communication apparatus receives the CBR service, no data can be read from a cache in the long run if rate adaptation is not performed.

Currently, in transport networks based on technologies such as a flexible Ethernet (flex Ethernet, FlexE)/metro transport network (metro transport network, MTN) technology, a communication apparatus encodes a CBR service into a block sequence, and then sends the CBR service to a downstream communication apparatus in a form of the block sequence. Before sending the block sequence to the downstream communication apparatus, the communication apparatus may determine whether the CBR service has a rate adaptation requirement. When determining that the CBR service has the rate adaptation requirement, the communication apparatus inserts or deletes one or more idle (idle) blocks before a start block in the block sequence based on the rate adaptation requirement of the CBR service, to implement rate adaptation. Then, the communication apparatus first sends the inserted idle block and then sends the block sequence to the downstream communication apparatus.

However, the inventor of this application finds that, in the foregoing method for implementing the rate adaptation by inserting the idle block before the start block in the block sequence generated based on the CBR service, because the one or more idle blocks are inserted, a delay and a jitter for processing the CBR service by the communication apparatus increase, and the increase in the delay and the jitter is a performance disadvantage that the communication apparatus needs to avoid as far as possible.

### SUMMARY

This application provides a communication method, a related apparatus, and a computer-readable storage medium, to decrease a delay and a jitter for processing a CBR service by a communication apparatus, and improve performance of the communication apparatus.

According to a first aspect, a communication method is provided. The method may be performed by a first communication apparatus. Specifically, the method includes the following steps: The first communication apparatus receives a first CBR service, generates, based on the first CBR service, a first block sequence carrying the first CBR service, and sends the first block sequence to a second communication apparatus. The first block sequence includes a first start block, M first data blocks, and a first termination block, the first block sequence includes first indication information and a first padding area, the first indication information indicates that no service data is padded in the first padding area, the first CBR service is not padded in the first padding area, and a length of the first padding area is less than a length of the first data block, where M is a positive integer.

When no service data is padded in the first padding area, data, for example, a fixed pattern that is all 0s or all 1s, other than the service data may be padded; or other data, for example, location information of the first padding area in the first block sequence or location information of the first indication information in the first block sequence, may be padded. Optionally, a fixed pattern may be padded in a part of the first padding area, and other data is padded in the other part of the first padding area. For ease of description, an example in which a fixed pattern is padded when no service data is padded in a padding area (for example, the first padding area or a third padding area described below) is used below for description.

Because an area (namely, the first padding area) in the first block sequence generated by the first communication apparatus based on the first CBR service does not carry the first CBR service, it can be learned that, in this way, an amount of data that is of the first CBR service and that is carried in the first block sequence can decrease, so that a rate at which the first communication apparatus sends the first CBR service to the second communication apparatus is reduced, to achieve a rate adaptation effect. In addition, because the length of the first padding area is less than the length of the first data block, and the length of the first data block is equal to a length of one idle block, when the first communication apparatus generates the first block sequence based on the first CBR service, rate adaptation at a granularity less than the length of the idle block is equivalently performed on the first CBR service once. Compared with a current case in which the first communication apparatus needs to insert an idle block before a start block in a block sequence to implement rate adaptation on a CBR service, this can reduce a delay and a jitter for processing the CBR service by the first communication apparatus.

It can be further learned that because the first block sequence sent by the first communication apparatus to the second communication apparatus includes the first indication information and the first padding area, and the first indication information indicates that no service data is padded in the first padding area, after receiving the first block sequence, the second communication apparatus may obtain the first indication information, and learn, based on the first indication information, that no service data is padded in the first padding area. Then, the second communication apparatus may discard the fixed pattern padded in the first padding area, and obtain the first CBR service from a remaining area in the first block sequence. Because the length of the first padding area is less than the length of the first data block, and the length of the first data block is equal to the length of the idle block, compared with a current case in which the second communication apparatus needs to first delete an idle block inserted before a start block in a block sequence to obtain a CBR service, this can reduce a delay and a jitter for processing the CBR service by the second communication apparatus.

In a possible implementation, the communication method provided in the first aspect further includes the following steps: The first communication apparatus receives a second CBR service, generates, based on the second CBR service, a second block sequence carrying a second CBR service, and sends the second block sequence to the second communication apparatus. The second block sequence includes a second start block, M second data blocks, and a second termination block, the second block sequence includes second indication information and a second padding area, the second indication information indicates that service data is padded in the second padding area, the second CBR service is padded in the second padding area, and a length of the second padding area is less than a length of the second data block.

Because a padding area (namely, the second padding area) in the second block sequence generated by the first communication apparatus based on the second CBR service carries data in the second CBR service, it can be learned that, in this way, an amount of data that is of the second CBR service and that is carried in the second block sequence does not decrease, and therefore a rate at which the first communication apparatus sends the second CBR service to the second communication apparatus is not reduced. Therefore, in this implementation, a CBR service can be transmitted when the CBR service has no rate adaptation requirement.

Because the second block sequence includes the second indication information and the second padding area, and the second indication information indicates that the service data is padded in the second padding area, after receiving the second block sequence, the second communication apparatus may learn, based on the second indication information, that the service data is padded in the second padding area. Then, when obtaining the second CBR service from the second block sequence, the second communication apparatus retains the service data padded in the second padding area, and obtains the second CBR service from a remaining area and the retained second padding area in the second block sequence, to implement transmission of the CBR service.

In a possible implementation, the first communication apparatus may specifically generate, in the following manner based on the first CBR service, the first block sequence carrying the first CBR service: first obtaining a first container, where the first container includes first data extracted from the first CBR service, the first indication information, and the first padding area; and then encoding the first container, to obtain the first block sequence.

The first container is an encapsulation structure with a fixed length provided in this application, and is for encapsulating the first CBR service.

In this implementation, the first data is encapsulated by using the first container provided in this application, and then the first container is encoded to generate the first block sequence, so that the generated first block sequence includes the first data extracted from the first CBR service, the first indication information, and the first padding area, to implement the rate adaptation of the first CBR service at the granularity less than the length of the idle block.

To improve flexibility of this solution, in a possible implementation, the first container includes a container overhead and a container payload, the container payload includes the first padding area and the first data, and the container overhead includes the first indication information. In another possible implementation, the first container includes a container overhead and a container payload, the container overhead includes the first indication information and the first padding area, and the container payload includes the first data. In this application, the first container is the encapsulation structure with the fixed length, and a location and a length of the container overhead and a location and a length of the container payload in the first container are also fixed. It can be learned that, compared with the implementation in which the container payload includes the first padding area, the implementation in which the container overhead includes the first padding area can increase a quantity of bits from the first CBR service that are carried in the container payload, to increase a quantity of bits from the first CBR service that are carried in the first block sequence. Therefore, during actual application, an appropriate container structure may be flexibly selected in the foregoing two possible implementations based on a specific status of a CBR service to be transmitted, to carry the CBR service.

To further improve the flexibility of this solution, in still another possible implementation, the first container further includes a fixed padding area, a fixed pattern is padded in the fixed padding area, and the fixed padding area does not carry service data. The fixed padding area is for enabling the generated first block sequence to meet a format including the first start block, the M first data blocks, and the first termination block when the first communication apparatus encodes the first container to generate the first block sequence.

To improve the flexibility of this solution, when the first container is encoded to generate the first block sequence, a manner in which the first container is carried in the first block sequence may be any one of the following: (1) The M first data blocks carry the first container, and the first start block and the first termination block do not carry the first container. (2) The M first data blocks and the first termination block carry the first container, and the first start block does not carry the first container. (3) The M first data blocks, the first termination block, and the first start block carry the first container.

It can be learned that, in comparison with the foregoing manner (1), in the foregoing manner (2), the first termination block also carries the first container. It may be understood that, in this way, the length of the first container may be designed to be longer. When the length of the first container may be designed to be longer, the length of the container payload in the first container may be designed to be longer. In this way, the quantity of bits from the first CBR service that are carried in the container payload can increase, so that the quantity of bits from the first CBR service that are carried in the first block sequence increases. It can be further learned that, in comparison with the foregoing manner (2), in the foregoing manner (3), the first start block also carries the first container. It may be understood that, in this way, the length of the first container may be designed to be longer. When the length of the first container may be designed to be longer, the length of the container payload in the first container may be designed to be longer. In this way, the quantity of bits from the first CBR service that are carried in the container payload can further increase, so that the quantity of bits from the first CBR service that are carried in the first block sequence further increases. Therefore, during actual application, an appropriate block combination may be flexibly selected in the foregoing three possible implementations based on a specific status of a CBR service to be transmitted, to carry a container.

In a possible implementation, the first communication apparatus may communicate with the second communication apparatus by using a fine-granularity technology. In this way, the solution provided in this application is applicable to two communication apparatuses that perform communication by using the fine-granularity technology, to resolve a current problem that a delay and a jitter for service processing are large when the two communication apparatuses communicate a CBR service.

In a possible implementation, the first communication apparatus may specifically communicate with the second communication apparatus by using a slicing packet network (slicing packet network, SPN) fine-granularity technology. In this scenario, the first communication apparatus may send the first block sequence to the second communication apparatus in the following manner: the first block sequence belongs to a first FlexE sub-client (sub-client), mapping the first FlexE sub-client to at least one sub-slot that is in a fine-granularity basic unit (fine-granularity basic unit, fgBU) and that is allocated to the first FlexE sub-client. In this way, the solution provided in this application is applicable to two communication apparatuses that perform communication by using the SPN fine-granularity technology, to resolve a current problem that a delay and a jitter for service processing are large when the two communication apparatuses communicate a CBR service.

In a possible implementation, the first communication apparatus may specifically communicate with the second communication apparatus by using an MTN fine-granularity technology. In this scenario, the first communication apparatus may send the first block sequence to the second communication apparatus in the following manner: If the first block sequence belongs to a first MTN fine-granularity path (MTN fine-granularity path, MTN fg-path), the first communication apparatus maps the first MTN fg-path to at least one sub-slot that is in an MTN fgBU and that is allocated to the first MTN fg-path. In this way, the solution provided in this application is applicable to two communication apparatuses that perform communication by using the MTN fine-granularity technology, to resolve a current problem that a delay and a jitter for service processing are large when the two communication apparatuses communicate a CBR service.

In a possible implementation, the first communication apparatus may communicate with the second communication apparatus through FlexE. In this scenario, the first communication apparatus may send the first block sequence to the second communication apparatus in the following manner: If the first block sequence belongs to a first FlexE client, the first communication apparatus maps the first FlexE client to at least one slot that is in a FlexE group (FlexE Group) and that is allocated to the first FlexE client. In this way, the solution provided in this application is applicable to two communication apparatuses that perform communication through FlexE, to resolve a current problem that a delay and a jitter for service processing are large when the two communication apparatuses communicate a CBR service.

In a possible implementation, the first communication apparatus may communicate with the second communication apparatus through an MTN. In this scenario, the first communication apparatus may send the first block sequence to the second communication apparatus in the following manner: If the first block sequence belongs to a first MTN path (MTN path, MTNP), the first communication apparatus maps the first MTNP to at least one slot that is at an MTN section (MTN section, MTNS) layer and that is allocated to the first MTNP. In this way, the solution provided in this application is applicable to two communication apparatuses that perform communication through the MTN, to resolve a current problem that a delay and a jitter for service processing are large when the two communication apparatuses communicate a CBR service.

In any one of the first aspect and the implementations of the first aspect, the technical solution provided in this application is described by using an example in which the first communication apparatus receives one CBR service (for example, the foregoing first CBR service and second CBR service) and generates, based on the CBR service, a block sequence (for example, the foregoing first block sequence and second block sequence) carrying the CBR service. In a possible implementation, the first communication apparatus may receive a plurality of CBR services including the first CBR service/the second CBR service, and generate, based on the plurality of CBR services, the first block sequence/the second block sequence carrying the plurality of CBR services. To improve the flexibility of this solution, possible implementations in which the first communication apparatus generates, based on the plurality of CBR services, the first block sequence/the second block sequence carrying the plurality of CBR services include but are not limited to the following possible implementations 1, 2, and 3:
In the possible implementation 1, using an example in which the first communication apparatus further receives a third CBR service before generating, based on the first CBR service, the first block sequence carrying the first CBR service, the first communication apparatus may generate, based on the first CBR service and the third CBR service, the first block sequence carrying the first CBR service and the third CBR service. Herein, the first block sequence includes not only the first indication information and the first padding area but also third indication information and a third padding area, where the third indication information indicates that no service data is carried in the third padding area, no service data is padded in the third padding area, and a sum of lengths of the third padding area and the first padding area is less than the length of the first data block.

In the possible implementation 2, using an example in which the first communication apparatus further receives a fourth CBR service before generating, based on the first CBR service, the first block sequence carrying the first CBR service, the first communication apparatus may generate, based on the first CBR service and the fourth CBR service, the first block sequence carrying the first CBR service and the fourth CBR service. Herein, the first block sequence includes not only a first indication area and the first padding area but also fourth indication information and a fourth padding area, where the fourth indication information indicates that service data is padded in the fourth padding area, the fourth CBR service is padded in the fourth padding area, and a sum of lengths of the fourth padding area and the first padding area is less than the length of the first data block.

In the possible implementation 3, using an example in which the first communication apparatus further receives a fifth CBR service before generating, based on the second CBR service, the second block sequence carrying the second CBR service, the first communication apparatus may generate, based on the second CBR service and the fifth CBR service, the second block sequence carrying the second CBR service and the fifth CBR service. Herein, the second block sequence includes not only a second indication area and the second padding area but also fifth indication information and a fifth padding area, where the fifth indication information indicates that service data is padded in the fifth padding area, the fifth CBR service is padded in the fifth padding area, and a sum of lengths of the fifth padding area and the first padding area is less than the length of the second data block.

It can be learned that in all the foregoing possible implementations 1, 2, and 3, one block sequence can carry a plurality of CBR services. Using the example in which the first communication apparatus communicates with the second communication apparatus by using the SPN fine-granularity technology, it may be understood that when the first block sequence carries the plurality of CBR services, the plurality of CBR services can be simultaneously transmitted in at least one sub-slot that is in the fgBU and that is allocated to one FlexE sub-client (for example, the foregoing first FlexE sub-client). Compared with a current case in which only one CBR service (for example, the foregoing first CBR service) can be transmitted in a sub-slot allocated to one FlexE sub-client, this can reduce a bandwidth waste and improve bandwidth utilization when a bandwidth (for example, 2.048 Mbps) of a CBR service is far less than a sum (for example, 10 Mbps) of bandwidths of sub-slots allocated to the FlexE sub-client.

It may be understood that when the first communication apparatus sends a plurality of CBR services to the second communication apparatus by using one block sequence to carry the plurality of CBR services, the plurality of CBR services may have a rate adaptation requirement. For example, when a rate at which the first communication apparatus sends each of the plurality of CBR services is greater than, for a long period of time, a rate at which the first communication apparatus receives the CBR service, no data can be read from a cache for the CBR service in the long run if rate adaptation is not performed. Therefore, when the first communication apparatus sends the plurality of CBR services to the second communication apparatus by using one block sequence to carry the plurality of CBR services, the rate adaptation also needs to be performed on a CBR service in the plurality of CBR services that has a rate adaptation requirement.

Further, it may be understood that when the first communication apparatus sends the plurality of CBR services, all the plurality of CBR services may have a rate adaptation requirement, or none of the plurality of CBR services has a rate adaptation requirement; or a part of the CBR services may have a rate adaptation requirement, and the other part of the CBR services do not have a rate adaptation requirement.

Using an example in which the plurality of CBR services sent by the first communication apparatus are the first CBR service and the third CBR service, and both the first CBR service and the third CBR service have a rate adaptation requirement, the first block sequence carrying the first CBR service and the third CBR service may be generated in the foregoing possible implementation 1 based on the first CBR service and the third CBR service.

It can be learned that, because two areas in the first block sequence that is generated by the first communication apparatus based on the first CBR service and the third CBR service and that carries the first CBR service and the third CBR service do not carry CBR services, to be specific, the first padding area does not carry the first CBR service, and the third padding area does not carry the third CBR service, both amounts of data of the first CBR service and data of the third CBR service that are carried in the first block sequence decrease, so that the rate at which the first communication apparatus sends the first CBR service to the second communication apparatus is reduced, to achieve the rate adaptation effect on the first CBR service, and a rate at which the first communication apparatus sends the third CBR service to the second communication apparatus is reduced, to achieve a rate adaptation effect on the third CBR service.

In addition, because the sum of the lengths of the first padding area and the third padding area is less than the length of one idle block, when the first communication apparatus generates, based on the first CBR service and the third CBR service, the first block sequence carrying the first CBR service and the third CBR service, rate adaptation at a granularity less than the length of the idle block is equivalently performed on the first CBR service and the third CBR service once. Compared with the current case in which the first communication apparatus needs to insert the idle block before the start block in the block sequence to implement the rate adaptation on the CBR service, this can reduce the delay and the jitter for processing the CBR service by the first communication apparatus.

It can be further learned that because the first block sequence that is sent by the first communication apparatus to the second communication apparatus and that carries the first CBR service and the third CBR service includes the first indication information, the third indication information, the first padding area, and the third padding area, the first indication information indicates that no service data is padded in the first padding area, and the third indication information indicates that no service data is padded in the third padding area, after receiving the first block sequence carrying the first CBR service and the third CBR service, the second communication apparatus may obtain the first indication information and the third indication information, learn, based on the first indication information, that no service data is padded in the first padding area, and learn, based on the third indication information, that no service data is padded in the third padding area. Then, the second communication apparatus may discard the fixed pattern padded in the first padding area and a fixed pattern padded in the third padding area, and then obtain the first CBR service and the third CBR service from a remaining area in the first block sequence.

Because the sum of the lengths of the first padding area and the third padding area is less than the length of one idle block, compared with the current case in which the second communication apparatus needs to first delete the idle block inserted before the start block in the block sequence to obtain the CBR service, this can reduce the delay and the jitter for processing the CBR service by the second communication apparatus.

Using an example in which the plurality of CBR services sent by the first communication apparatus are the first CBR service and the fourth CBR service, the first CBR service has a rate adaptation requirement, and the fourth CBR service does not have a rate adaptation requirement, the first block sequence carrying the first CBR service and the fourth CBR service may be generated in the foregoing possible implementation 2 based on the first CBR service and the fourth CBR service.

It can be learned that, because an area (namely, the first padding area) in the first block sequence that is generated by the first communication apparatus based on the first CBR service and the fourth CBR service and that carries the first CBR service and the fourth CBR service does not carry the first CBR service, an amount of data that is of the first CBR service and that is carried in the first block sequence can decrease, so that the rate at which the first communication apparatus sends the first CBR service to the second communication apparatus is reduced, to achieve the rate adaptation effect on the first CBR service. The fourth padding area carries the fourth CBR service. In this way, an amount of data that is of the first CBR service and that is carried in the first block sequence can remain unchanged, and no rate adaption is performed on the fourth CBR service.

In addition, because the sum of the lengths of the first padding area and the fourth padding area is less than the length of one idle block, the length of the first padding area is definitely less than the length of one idle block. Therefore, when the first communication apparatus generates, based on the first CBR service and the fourth CBR service, the first block sequence carrying the first CBR service and the fourth CBR service, rate adaptation at a granularity less than the length of the idle block is equivalently performed on the first CBR service once. Compared with the current case in which the first communication apparatus needs to insert the idle block before the start block in the block sequence to implement the rate adaptation on the CBR service, this can reduce the delay and the jitter for processing the CBR service by the first communication apparatus.

It can be further learned that because the first block sequence that is sent by the first communication apparatus to the second communication apparatus and that carries the first CBR service and the fourth CBR service includes the first indication information, the fourth indication information, the first padding area, and the fourth padding area, the first indication information indicates that no service data is padded in the first padding area, and the fourth indication information indicates that the service data is padded in the fourth padding area, after receiving the first block sequence carrying the first CBR service and the fourth CBR service, the second communication apparatus may obtain the first indication information and the fourth indication information, learn, based on the first indication information, that no service data is padded in the first padding area, and learn, based on the fourth indication information, that the service data is padded in the fourth padding area. Next, the second communication apparatus may discard the fixed pattern padded in the first padding area, retain the service data padded in the fourth padding area, and then obtain the first CBR service and the fourth CBR service from a remaining area and the retained fourth padding area in the first block sequence.

In addition, because the sum of the lengths of the first padding area and the fourth padding area is less than the length of one idle block, the length of the first padding area is definitely less than the length of one idle block. Compared with the current case in which the second communication apparatus needs to first delete the idle block inserted before the start block in the block sequence to obtain the CBR service, this can reduce the delay and the jitter for processing the CBR service by the second communication apparatus.

Using an example in which the plurality of CBR services sent by the first communication apparatus are the second CBR service and the fifth CBR service, the second CBR service has a rate adaptation requirement, and the fifth CBR service does not have a rate adaptation requirement, the second block sequence carrying the second CBR service and the fifth CBR service may be generated in the foregoing possible implementation 3 based on the second CBR service and the fifth CBR service.

It can be learned that in the second block sequence that is generated by the first communication apparatus based on the second CBR service and the fifth CBR service and that carries the second CBR service and the fifth CBR service, the second padding area carries the second CBR service, and the fifth padding area carries the fifth CBR service. In this way, an amount of data that is of the second CBR service and that is carried in the second block sequence can remain unchanged, and an amount of data that is of the fifth CBR service and that is carried in the second block sequence can remain unchanged, in other words, the first communication apparatus does not perform rate adaptation on the second CBR service and the fifth CBR service.

It can be further learned that because the second block sequence that is sent by the first communication apparatus to the second communication apparatus and that carries the second CBR service and the fifth CBR service includes the second indication information, the fifth indication information, the second padding area, and the fifth padding area, the second indication information indicates that the service data is padded in the second padding area, and the fifth indication information indicates that the service data is padded in the fifth padding area, after receiving the second block sequence carrying the second CBR service and the fifth CBR service, the second communication apparatus may obtain the second indication information and the fifth indication information, learn, based on the second indication information, that the service data is padded in the second padding area, and learn, based on the fifth indication information, that the service data is padded in the fifth padding area. Then, the second network device may retain a fixed pattern padded in the second padding area, retain the service data padded in the fifth padding area, and obtain the second CBR service and the fifth CBR service from a remaining area and the retained second padding area and fifth padding area in the second block sequence.

In a possible implementation, for the first CBR service, the second CBR service, the third CBR service, the fourth CBR service, and the fifth CBR service, using the first CBR service as an example, the first communication apparatus may determine, with reference to any one or a combination of the following manner 1, manner 2, and manner 3, whether the first CBR service has the rate adaptation requirement:
Manner 1: A rate at which the first communication apparatus receives the first CBR service is periodically obtained, and it is determined whether the rate at which the first communication apparatus receives the first CBR service is less than a rate threshold. When it is determined that the rate at which the first communication apparatus receives the first CBR service is less than the rate threshold, it is determined that the first CBR service has the rate adaptation requirement. When it is determined that the rate at which the first communication apparatus receives the first CBR service is greater than or equal to the rate threshold, it is determined that the first CBR service does not have the rate adaptation requirement.
Manner 2: A depth of the first CBR service in a cache queue that is in the first communication apparatus and that is for caching the first CBR service is periodically obtained. When the depth of the first CBR service in the cache queue is less than a depth threshold, it is determined that the first CBR service has the rate adaptation requirement. When the depth of the first CBR service in the cache queue is greater than or equal to a depth threshold, it is determined that the first CBR service does not have the rate adaptation requirement.
Manner 3: A depth of the first CBR service in a cache queue that is in the first communication apparatus and that is for caching the first CBR service is periodically obtained. When a ratio of the depth of the first CBR service in the cache queue to a total depth of the cache queue is less than a depth ratio threshold, it is determined that the first CBR service has the rate adaptation requirement. When a ratio of the depth of the first CBR service in the cache queue to a total depth of the cache queue is greater than or equal to a depth ratio threshold, it is determined that the first CBR service does not have the rate adaptation requirement.

It should be understood that the manner 1, the manner 2, and the manner 3 are merely examples, and should not be considered as specific limitations on a manner in which the first communication apparatus determines, for a CBR service, whether the CBR service has a rate adaptation requirement.

According to a second aspect, this application provides a communication method. The method may be performed by a second communication apparatus. Specifically, the method includes the following steps: The second communication apparatus receives a first block sequence that is sent by a first communication apparatus and that carries a first CBR service, where the first block sequence includes a first start block, M first data blocks, and a first termination block, the first block sequence includes first indication information and a first padding area, the first indication information indicates that no service data is padded in the first padding area, the first CBR service is not padded in the first padding area, and a length of the first padding area is less than a length of the first data block, where M is a positive integer. Then, the second communication apparatus obtains the first CBR service based on the first block sequence.

In a possible implementation, the communication method provided in the second aspect further includes the following step:
The second communication apparatus receives a second block sequence that is sent by the first communication apparatus and that carries a second CBR service, where the second block sequence includes a second start block, M second data blocks, and a second termination block, the second block sequence includes second indication information and a second padding area, the second indication information indicates that service data is padded in the second padding area, the second CBR service is padded in the second padding area, and a length of the second padding area is less than a length of the second data block. Then, the second communication apparatus obtains the second CBR service based on the second block sequence.

In a possible implementation, the second communication apparatus may specifically obtain the first CBR service in the following manner based on the first block sequence: decoding the first block sequence to obtain a first container, where the first container includes first data extracted from the first CBR service, the first indication information, and the first padding area; and then obtaining the first CBR service from the first container.

In a possible implementation, the first container includes a container overhead and a container payload, the container payload includes the first padding area and the first data, and the container overhead includes the first indication information.

In a possible implementation, the first container includes a container overhead and a container payload, the container overhead includes the first indication information and the first padding area, and the container payload includes the first data.

In a possible implementation, the first container further includes a fixed padding area, a fixed pattern is padded in the fixed padding area, and the fixed padding area does not carry service data.

In a possible implementation, the M first data blocks carry the first container, and the first start block and the first termination block do not carry the first container.

In a possible implementation, the M first data blocks and the first termination block carry the first container, and the first start block does not carry the first container.

In a possible implementation, the second communication apparatus communicates with the first communication apparatus by using a fine-granularity technology.

In a possible implementation, the second communication apparatus specifically communicates with the first communication apparatus by using an SPN fine-granularity technology. In this scenario, the second communication apparatus may receive, in the following manner, the first block sequence sent by the first communication apparatus: the first block sequence belongs to a first FlexE sub-client, obtaining the first block sequence from at least one sub-slot that is in an fgBU and that is allocated to the first FlexE sub-client.

In a possible implementation, the second communication apparatus specifically communicates with the first communication apparatus by using an MTN fine-granularity technology. In this scenario, the second communication apparatus may receive, in the following manner, the first block sequence sent by the first communication apparatus: the first block sequence belongs to a first MTN fg-path, obtaining the first block sequence from at least one sub-slot that is in an MTN fgBU and that is allocated to the first MTN fg-path.

In a possible implementation, the second communication apparatus communicates with the first communication apparatus through FlexE. In this scenario, the second communication apparatus may receive, in the following manner, the first block sequence sent by the first communication apparatus: the first block sequence belongs to a first FlexE client, obtaining the first block sequence from at least one slot that is in a FlexE group and that is allocated to the first FlexE client.

In a possible implementation, the second communication apparatus communicates with the first communication apparatus through an MTN. In this scenario, the second communication apparatus may receive, in the following manner, the first block sequence sent by the first communication apparatus: the first block sequence belongs to a first MTNP, obtaining the first block sequence from at least one slot that is at an MTNS and that is allocated to the first MTNP.

In a possible implementation, the first block sequence carries not only the first CBR service but also a third CBR service. The first block sequence includes not only the first indication information and the first padding area but also third indication information and a third padding area, the third indication information indicates that no service data is padded in the third padding area, the third CBR service is not padded in the third padding area, and a sum of lengths of the third padding area and the first padding area is less than the length of the first data block. In this case, the second communication apparatus may obtain the first CBR service and the third CBR service based on the first block sequence.

In a possible implementation, the first block sequence carries not only the first CBR service but also a fourth CBR service. The first block sequence includes not only the first indication information and the first padding area but also fourth indication information and a fourth padding area, the fourth indication information indicates that service data is padded in the fourth padding area, the fourth CBR service is padded in the fourth padding area, and a sum of lengths of the fourth padding area and the first padding area is less than the length of the first data block. In this case, the second communication apparatus may obtain the first CBR service and the fourth CBR service based on the first block sequence.

In a possible implementation, the second block sequence carries not only the second CBR service but also a fifth CBR service. The second block sequence includes not only the second indication information and the second padding area but also fifth indication information and a fifth padding area, the fifth indication information indicates that service data is padded in the fifth padding area, the fifth CBR service is padded in the fifth padding area, and a sum of lengths of the fifth padding area and the first padding area is less than the length of the second data block. In this case, the second communication apparatus may obtain the second CBR service and the fifth CBR service based on the second block sequence.

For related beneficial effects and descriptions of any one of the communication method provided in the second aspect and the implementations of the second aspect, refer to the related beneficial effects and descriptions of any one of the first aspect and the implementations of the first aspect. Details are not described herein again.

According to a third aspect, a first communication apparatus is provided. The apparatus includes a transceiver unit and a processing unit. The transceiver unit is configured to perform a receiving operation and/or a sending operation performed by the first communication apparatus in the first aspect. The processing unit is configured to perform an operation, other than the receiving operation and/or the sending operation, performed by the first communication apparatus in the first aspect.

In a specific example, the transceiver unit is configured to receive a first CBR service. The processing unit is configured to generate, based on the first CBR service, a first block sequence carrying the first CBR service, where the first block sequence includes a first start block, M first data blocks, and a first termination block, the first block sequence includes first indication information and a first padding area, the first indication information indicates that no service data is padded in the first padding area, the first CBR service is not padded in the first padding area, and a length of the first padding area is less than a length of the first data block, where M is a positive integer. The transceiver unit is further configured to send the first block sequence to a second communication apparatus.

In a possible implementation, the processing unit is specifically configured to: when it is determined that the first CBR service has a rate adaptation requirement, generate, based on the first CBR service, the first block sequence carrying the first CBR service.

In a possible implementation, the transceiver unit is further configured to receive a second CBR service. The processing unit is further configured to generate, based on the second CBR service, a second block sequence carrying the second CBR service, where the second block sequence includes a second start block, M second data blocks, and a second termination block, the second block sequence includes second indication information and a second padding area, the second indication information indicates that service data is padded in the second padding area, the second CBR service is padded in the second padding area, and a length of the second padding area is less than a length of the second data block. The transceiver unit is further configured to send the second block sequence to the second communication apparatus.

In a possible implementation, the processing unit is specifically configured to: when it is determined that the second CBR service does not have a rate adaptation requirement, generate, based on the second CBR service, the second block sequence carrying the second CBR service.

In a possible implementation, the processing unit is specifically configured to generate, in the following manner based on the first CBR service, the first block sequence carrying the first CBR service: obtaining a first container, where the first container includes first data extracted from the first CBR service, the first indication information, and the first padding area; and then encoding the first container, to obtain the first block sequence.

In a possible implementation, the first container includes a container overhead and a container payload, the container payload includes the first padding area and the first data, and the container overhead includes the first indication information.

In a possible implementation, the first container includes a container overhead and a container payload, the container overhead includes the first indication information and the first padding area, and the container payload includes the first data.

In a possible implementation, the first container further includes a fixed padding area, a fixed pattern is padded in the fixed padding area, and the fixed padding area does not carry service data.

In a possible implementation, the M first data blocks carry the first container, and the first start block and the first termination block do not carry the first container.

In a possible implementation, the M first data blocks and the first termination block carry the first container, and the first start block does not carry the first container.

In a possible implementation, the transceiver unit is configured to communicate with the second communication apparatus by using a fine-granularity technology.

In a possible implementation, the transceiver unit is specifically configured to send the first block sequence to the second communication apparatus in the following manner: the first block sequence belongs to a first FlexE sub-client sub-client, mapping the first FlexE sub-client to at least one sub-slot that is in an fgBU and that is allocated to the first FlexE sub-client.

In a possible implementation, the transceiver unit is specifically configured to send the first block sequence to the second communication apparatus in the following manner: the first block sequence belongs to a first MTN fg-path, mapping the first MTN fg-path to at least one sub-slot that is in an MTN fgBU and that is allocated to the first MTN fg-path.

In a possible implementation, the transceiver unit is specifically configured to send the first block sequence to the second communication apparatus in the following manner: the first block sequence belongs to a first FlexE client, mapping the first FlexE client to at least one slot that is in a FlexE group and that is allocated to the first FlexE client.

In a possible implementation, the transceiver unit is specifically configured to send the first block sequence to the second communication apparatus in the following manner: the first block sequence belongs to a first MTNP, mapping the first MTNP to at least one slot that is at an MTNS and that is allocated to the first MTNP.

In a possible implementation, the transceiver unit is further configured to receive a third CBR service. The processing unit is specifically configured to generate, based on the first CBR service and the third CBR service, the first block sequence carrying the first CBR service and the third CBR service, where the first block sequence further includes third indication information and a third padding area, the third indication information indicates that no service data is carried in the third padding area, the service data is not padded in the third padding area, and a sum of lengths of the third padding area and the first padding area is less than the length of the first data block.

In a possible implementation, the processing unit is specifically configured to: when it is determined that both the first CBR service and the third CBR service have a rate adaptation requirement, generate, based on the first CBR service and the third CBR service, the first block sequence carrying the first CBR service and the third CBR service.

In a possible implementation, the transceiver unit is further configured to receive a fourth CBR service. The processing unit is specifically configured to generate, based on the first CBR service and the fourth CBR service, the first block sequence carrying the first CBR service and the fourth CBR service, where the first block sequence further includes fourth indication information and a fourth padding area, the fourth indication information indicates that service data is padded in the fourth padding area, the fourth CBR service is padded in the fourth padding area, and a sum of lengths of the fourth padding area and the first padding area is less than the length of the first data block.

In a possible implementation, the processing unit is specifically configured to: when it is determined that the first CBR service has a rate adaptation requirement and the fourth CBR service does not have a rate adaptation requirement, generate, based on the first CBR service and the fourth CBR service, the first block sequence carrying the first CBR service and the fourth CBR service.

In a possible implementation, the transceiver unit is further configured to receive a fifth CBR service. The processing unit is specifically configured to generate, based on the second CBR service and the fifth CBR service, the second block sequence carrying the second CBR service and the fifth CBR service, where the second block sequence further includes fifth indication information and a fifth padding area, the fifth indication information indicates that service data is padded in the fifth padding area, the fifth CBR service is padded in the fifth padding area, and a sum of lengths of the fifth padding area and the first padding area is less than the length of the second data block.

In a possible implementation, the processing unit is specifically configured to: when it is determined that neither the second CBR service nor the fifth CBR service has a rate adaptation requirement, generate, based on the second CBR service and the fifth CBR service, the second block sequence carrying the second CBR service and the fifth CBR service.

In a possible implementation, using the first CBR service as an example, the processing unit may specifically determine, in any one or a combination of the following manner 1, manner 2, and manner 3, whether the first CBR service, the second CBR service, the third CBR service, the fourth CBR service, and the fifth CBR service have the rate adaptation requirement:
Manner 1: A rate at which the transceiver unit receives the first CBR service is periodically obtained, and it is determined whether the rate at which the transceiver unit receives the first CBR service is less than a rate threshold. When it is determined that the rate at which the transceiver unit receives the first CBR service is less than the rate threshold, it is determined that the first CBR service has the rate adaptation requirement. When it is determined that the rate at which the transceiver unit receives the first CBR service is greater than or equal to the rate threshold, it is determined that the first CBR service does not have the rate adaptation requirement.
Manner 2: A depth of the first CBR service in a cache queue that is in the transceiver unit and that is for caching the first CBR service is periodically obtained. When the depth of the first CBR service in the cache queue is less than a depth threshold, it is determined that the first CBR service has the rate adaptation requirement. When the depth of the first CBR service in the cache queue is greater than or equal to a depth threshold, it is determined that the first CBR service does not have the rate adaptation requirement.
Manner 3: A depth of the first CBR service in a cache queue that is in the transceiver unit and that is for caching the first CBR service is periodically obtained. When a ratio of the depth of the first CBR service in the cache queue to a total depth of the cache queue is less than a depth ratio threshold, it is determined that the first CBR service has the rate adaptation requirement. When a ratio of the depth of the first CBR service in the cache queue to a total depth of the cache queue is greater than or equal to a depth ratio threshold, it is determined that the first CBR service does not have the rate adaptation requirement.

It should be understood that the manner 1, the manner 2, and the manner 3 are merely examples, and should not be considered as specific limitations on a manner in which the processing unit determines whether the first CBR service has the rate adaptation requirement.

For related beneficial effects and descriptions of any one of the communication apparatus provided in the third aspect and the implementations of the third aspect, refer to the related beneficial effects and descriptions of any one of the first aspect and the implementations of the first aspect. Details are not described herein again.

According to a fourth aspect, a second communication apparatus is provided. The apparatus includes a transceiver unit and a processing unit. The transceiver unit is configured to perform a receiving operation and/or a sending operation performed by the second communication apparatus in the second aspect. The processing unit is configured to perform an operation, other than the receiving operation and/or the sending operation, performed by the second communication apparatus in the second aspect.

In a specific example, the transceiver unit is configured to receive a first block sequence that is sent by a first communication apparatus and that carries a first CBR service, where the first block sequence includes a first start block, M first data blocks, and a first termination block, the first block sequence includes first indication information and a first padding area, the first indication information indicates that service data is not padded in the first padding area, the first CBR service is not padded in the first padding area, and a length of the first padding area is less than a length of the first data block, where M is a positive integer. The processing unit is configured to obtain the first CBR service based on the first block sequence.

In a possible implementation, the transceiver unit is further configured to receive a second block sequence that is sent by the first communication apparatus and that carries a second CBR service, where the second block sequence includes a second start block, M second data blocks, and a second termination block, the second block sequence includes second indication information and a second padding area, the second indication information indicates that service data is padded in the second padding area, the second CBR service is padded in the second padding area, and a length of the second padding area is less than a length of the second data block. The processing unit is further configured to obtain the second CBR service based on the second block sequence.

In a possible implementation, the processing unit is specifically configured to obtain the first CBR service in the following manner based on the first block sequence: decoding the first block sequence to obtain a first container, where the first container includes first data extracted from the first CBR service, the first indication information, and the first padding area; and then obtaining the first CBR service from the first container.

In a possible implementation, the first container includes a container overhead and a container payload, the container payload includes the first padding area and the first data, and the container overhead includes the first indication information.

In a possible implementation, the first container includes a container overhead and a container payload, the container overhead includes the first indication information and the first padding area, and the container payload includes the first data.

In a possible implementation, the first container further includes a fixed padding area, a fixed pattern is padded in the fixed padding area, and the fixed padding area does not carry service data.

In a possible implementation, the M first data blocks carry the first container, and the first start block and the first termination block do not carry the first container.

In a possible implementation, the M first data blocks and the first termination block carry the first container, and the first start block does not carry the first container.

In a possible implementation, the transceiver unit is configured to communicate with the first communication apparatus by using a fine-granularity technology.

In a possible implementation, the transceiver unit is specifically configured to receive, in the following manner, the first block sequence sent by the first communication apparatus: the first block sequence belongs to a first FlexE sub-client, obtaining the first block sequence from at least one sub-slot that is in an fgBU and that is allocated to the first FlexE sub-client.

In a possible implementation, the transceiver unit is specifically configured to receive, in the following manner, the first block sequence sent by the first communication apparatus: the first block sequence belongs to a first MTN fg-path, obtaining the first block sequence from at least one sub-slot that is in an MTN fgBU and that is allocated to the first MTN fg-path.

In a possible implementation, the transceiver unit is specifically configured to receive, in the following manner, the first block sequence sent by the first communication apparatus: the first block sequence belongs to a first FlexE client, obtaining the first block sequence from at least one slot that is in a FlexE group and that is allocated to the first FlexE client.

In a possible implementation, the transceiver unit is specifically configured to receive, in the following manner, the first block sequence sent by the first communication apparatus: the first block sequence belongs to a first MTNP, obtaining the first block sequence from at least one slot that is at an MTNS and that is allocated to the first MTNP.

In a possible implementation, the first block sequence carries not only the first CBR service but also a third CBR service. The first block sequence includes not only a first indication area and the first padding area but also third indication information and a third padding area, the third indication information indicates that no service data is padded in the third padding area, the third CBR service is not padded in the third padding area, and a sum of lengths of the third padding area and the first padding area is less than the length of the first data block. The processing unit is specifically configured to obtain the first CBR service and the third CBR service based on the first block sequence.

In a possible implementation, the first block sequence carries not only the first CBR service but also a fourth CBR service. The first block sequence includes not only a first indication area and the first padding area but also fourth indication information and a fourth padding area, the fourth indication information indicates that service data is padded in the fourth padding area, the fourth CBR service is padded in the fourth padding area, and a sum of lengths of the fourth padding area and the first padding area is less than the length of the first data block. The processing unit is specifically configured to obtain the first CBR service and the fourth CBR service based on the first block sequence.

In a possible implementation, the second block sequence carries not only the second CBR service but also a fifth CBR service. The second block sequence includes not only the second indication information and the second padding area but also fifth indication information and a fifth padding area, the fifth indication information indicates that service data is padded in the fifth padding area, the fifth CBR service is padded in the fifth padding area, and a sum of lengths of the fifth padding area and the first padding area is less than the length of the second data block. The processing unit is specifically configured to obtain the second CBR service and the fifth CBR service based on the second block sequence.

For related beneficial effects and descriptions of any one of the second communication apparatus provided in the fourth aspect and the implementations of the fourth aspect, refer to the related beneficial effects and descriptions of any one of the first aspect and the implementations of the first aspect. Details are not described herein again.

According to a fifth aspect, a communication apparatus is provided, and includes a processor and a memory. The communication apparatus may be the foregoing first communication apparatus, or may be the foregoing second communication apparatus. Optionally, the communication apparatus further includes a transceiver. The memory is configured to store a computer program or instructions. The processor is configured to invoke the computer program or the instructions from the memory and run the computer program or the instructions. When the processor executes the computer program or the instructions in the memory, the communication apparatus is enabled to perform any one of the first aspect, the second aspect, and the implementations of the first aspect and the second aspect.

Optionally, there are one or more processors and one or more memories.

Optionally, the memory may be integrated with the processor, or the memory and the processor are disposed separately.

Optionally, the transceiver may include a transmitter (transmitter) and a receiver (receiver).

According to a sixth aspect, a communication apparatus is provided, and includes a processor. The communication apparatus may be the foregoing first communication apparatus, or may be the foregoing second communication apparatus. The processor is coupled to a memory, and may be configured to perform any one of the first aspect, the second aspect, and the implementations of the first aspect and the second aspect. The communication apparatus may be the foregoing first communication apparatus, or may be the foregoing second communication apparatus. Optionally, the communication apparatus further includes the memory. Optionally, the communication apparatus further includes a communication interface, and the processor is coupled to the communication interface.

In a possible implementation, when the communication apparatus is the first communication apparatus or the second communication apparatus, the communication interface may be a transceiver or an input/output port. Optionally, the transceiver may be a transceiver circuit. Optionally, the input/output port may be an input/output circuit.

In another possible implementation, when the communication apparatus is a chip or a chip system of the first communication apparatus or a chip or a chip system of the second communication apparatus, the communication interface may be an input/output port, an interface circuit, an output circuit, an input circuit, a pin, a related circuit, or the like of the chip or the chip system. The processor may alternatively be embodied as a processing circuit or a logic circuit.

According to a seventh aspect, a communication system is provided. The communication system includes the foregoing first communication apparatus and second communication apparatus.

According to an eighth aspect, a computer program product is provided. The computer program product includes a computer program (which may also be referred to as code or instructions). When the computer program is run, a computer is enabled to perform any one of the first aspect, the second aspect, and the implementations of the first aspect and the second aspect.

According to a ninth aspect, a computer-readable storage medium is provided. The computer-readable medium stores a computer program (which may also be referred to as code or instructions). When the computer program is run on a computer, the computer is enabled to perform any one of the first aspect, the second aspect, and the implementations of the first aspect and the second aspect.

According to a tenth aspect, a chip system is provided. The chip system may include a processor. The processor is coupled to a memory, and may be configured to perform any one of the first aspect, the second aspect, and the implementations of the first aspect and the second aspect. Optionally, the chip system further includes the memory. The memory is configured to store a computer program (which may also be referred to as code or instructions). The processor is configured to invoke the computer program from the memory and run the computer program, to enable an apparatus in which the chip system is installed to perform any one of the first aspect, the second aspect, and the implementations of the first aspect and the second aspect.

According to an eleventh aspect, a processing apparatus is provided, including an interface circuit and a processing circuit. The interface circuit may include an input circuit and an output circuit. The processing circuit is configured to: receive a signal by using the input circuit, and send a signal by using the output circuit, so that any one of the first aspect, the second aspect, and the implementations of the first aspect and the second aspect is implemented.

In a specific implementation process, the processing apparatus may be a chip, the input circuit may be an input pin, the output circuit may be an output pin, and the processing circuit may be a transistor, a gate circuit, a trigger, various logic circuits, or the like. An input signal received by the input circuit may be received and input by, for example, a receiver, a signal output by the output circuit may be output to, for example, a transmitter and transmitted by the transmitter, and the input circuit and the output circuit may be a same circuit, where the circuit is used as the input circuit and the output circuit at different moments. Specific implementations of the processor and various circuits are not limited in this application.

In another implementation, the processing apparatus may be a part of components, for example, an integrated circuit product such as a system chip or a communication chip, in a first communication apparatus or a second communication apparatus. The interface circuit may be an input/output port, an interface circuit, an output circuit, an input circuit, a pin, a related circuit, or the like on the chip or a chip system. The processing circuit may be a logic circuit on the chip.

### BRIEF DESCRIPTION OF DRAWINGS

FIG. 1 is a diagram of a structure of a block in a 64B/66B encoding format according to this application;
FIG. 2 is a diagram of a structure of an idle block according to this application;
FIG. 3 is a diagram of a FlexE technology according to this application;
FIG. 4 is a diagram of mapping different services to different PHY links according to this application;
FIG. 5 is a diagram of an architecture of a hierarchical model of an MTN protocol stack according to this application;
FIG. 6 is a diagram of a format of an fgBU according to this application;
FIG. 7 is a diagram of an application scenario according to this application;
FIG. 8 is a diagram of another application scenario according to this application;
FIG. 9a is a diagram of a process of converting a service into a block sequence according to this application;
FIG. 9b is a diagram of a process of converting a block sequence into a service according to this application;
FIG. 10 is a diagram of interaction in a communication method according to this application;
FIG. 11a is a diagram of a structure of a first container according to this application;
FIG. 11b is an example diagram of a structure of a first container according to this application;
FIG. 11c is a diagram of a structure of another first container according to this application;
FIG. 11d is an example diagram of a structure of another first container according to this application;
FIG. 11e is a diagram of a structure of still another first container according to this application;
FIG. 12a is an example diagram of a process of converting a service into a block sequence according to this application;
FIG. 12b is an example diagram of a process of converting a block sequence into a service according to this application;
FIG. 12c-1 and FIG. 12c-2 are an example diagram of another process of converting a service into a block sequence according to this application;
FIG. 12d-1 and FIG. 12d-2 are an example diagram of another process of converting a block sequence into a service according to this application;

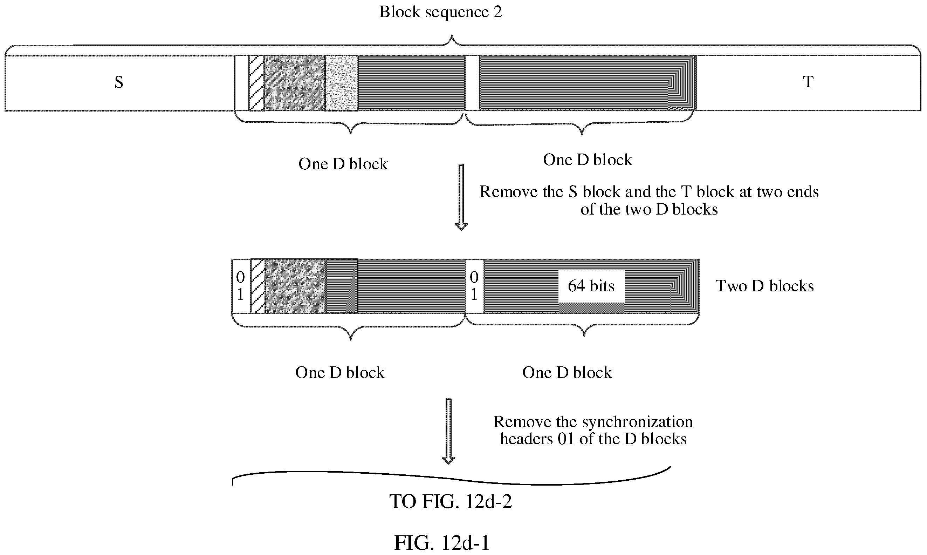

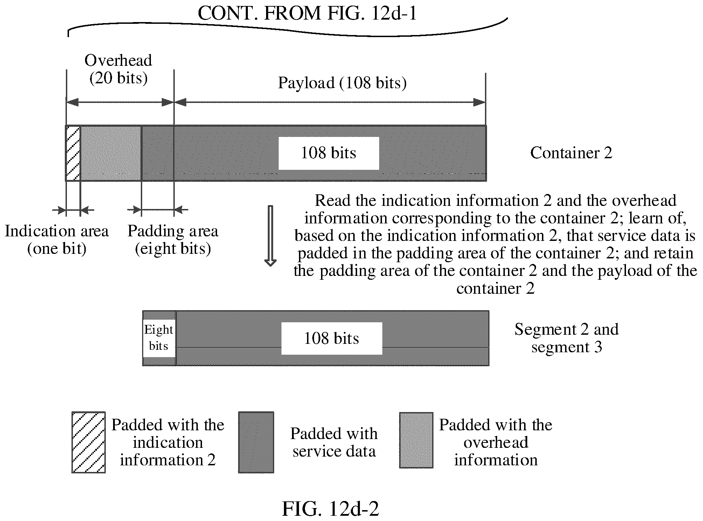

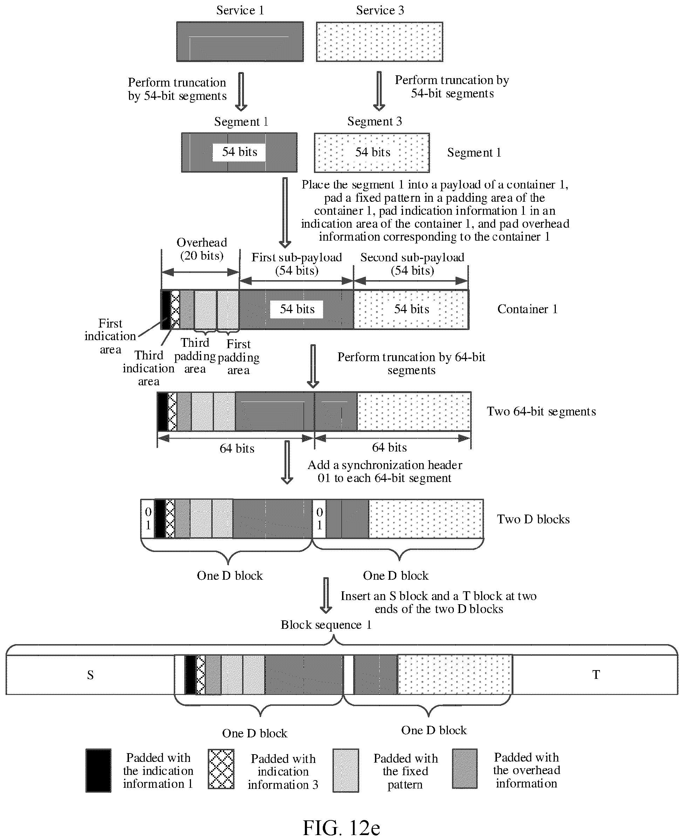

FIG. 12e is a diagram of still another process of converting a service into a block sequence according to this application;

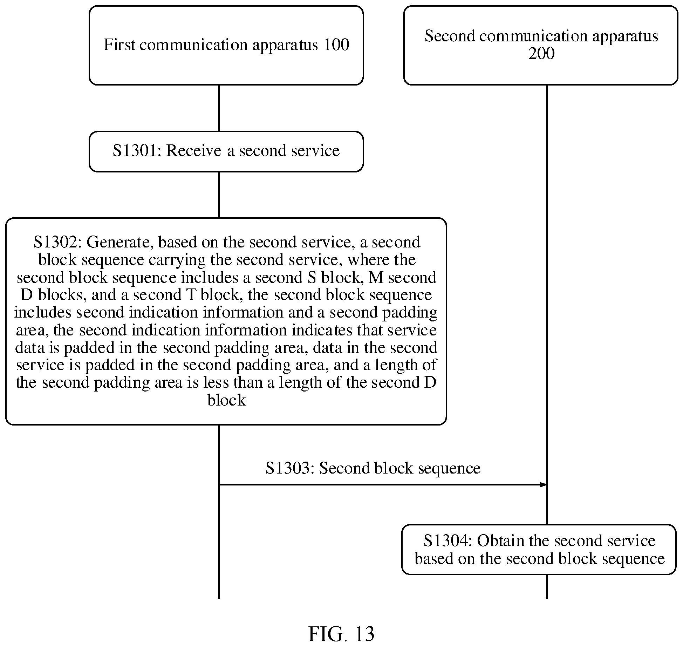

FIG. 13 is a diagram of interaction in another communication method according to this application;

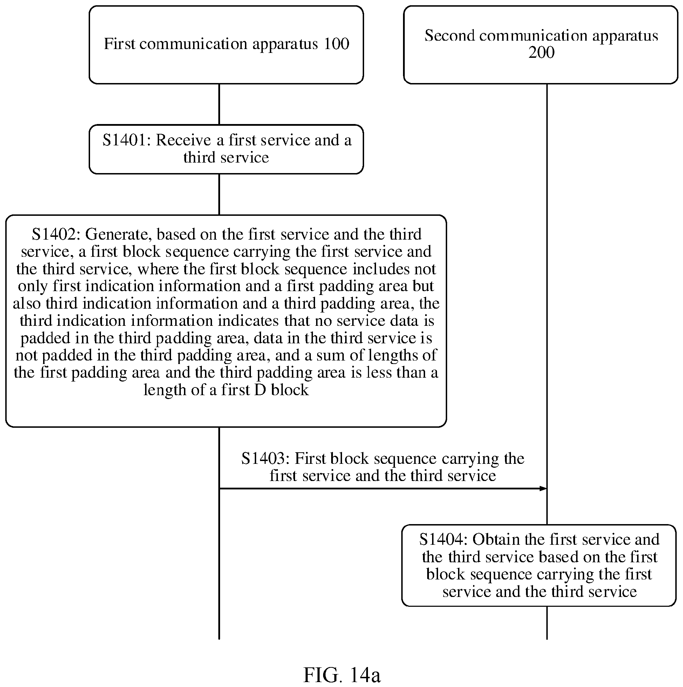

FIG. 14a is a diagram of interaction in another communication method according to this application;

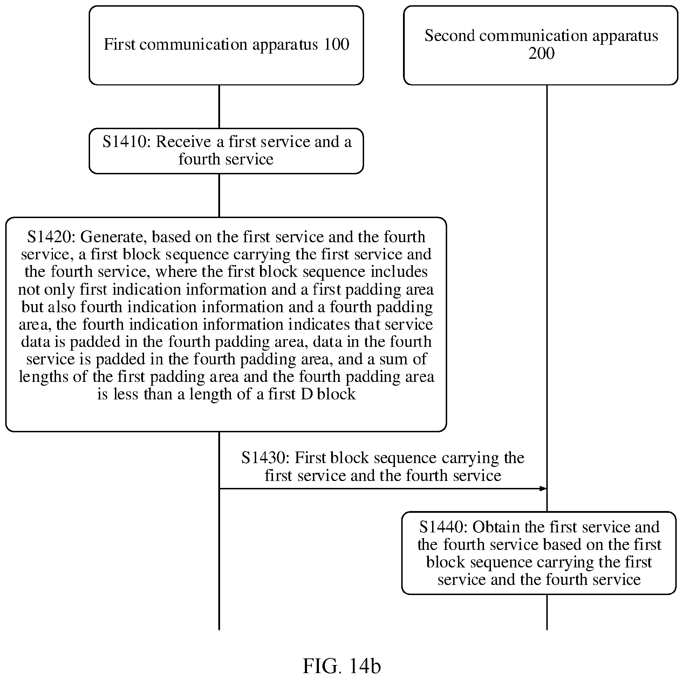

FIG. 14b is a diagram of interaction in another communication method according to this application;

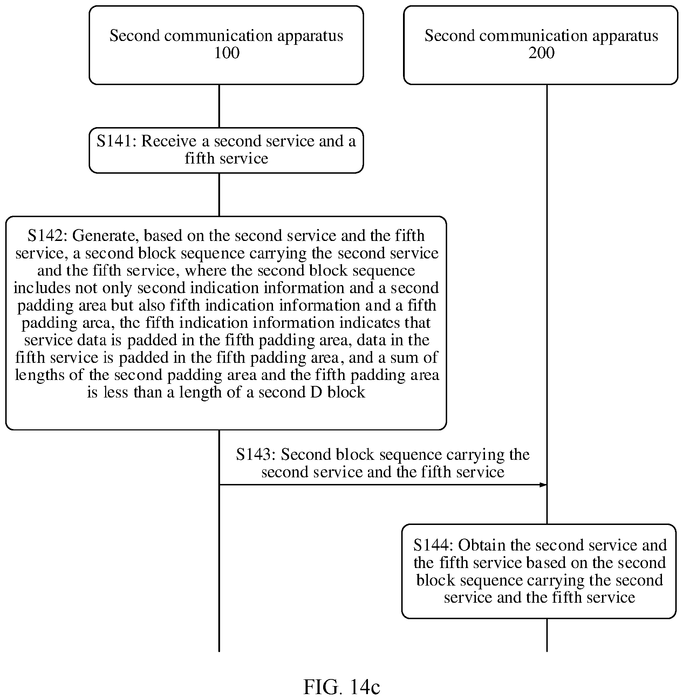

FIG. 14c is a diagram of interaction in another communication method according to this application;

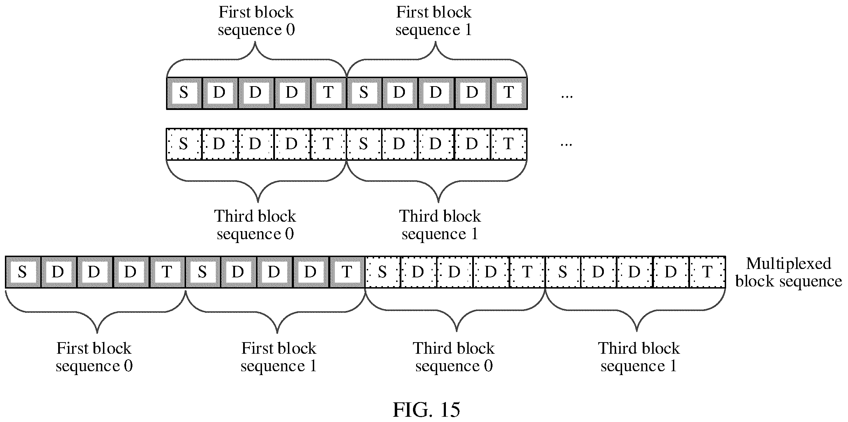

FIG. 15 is an example diagram of multiplexing a block sequence according to this application;

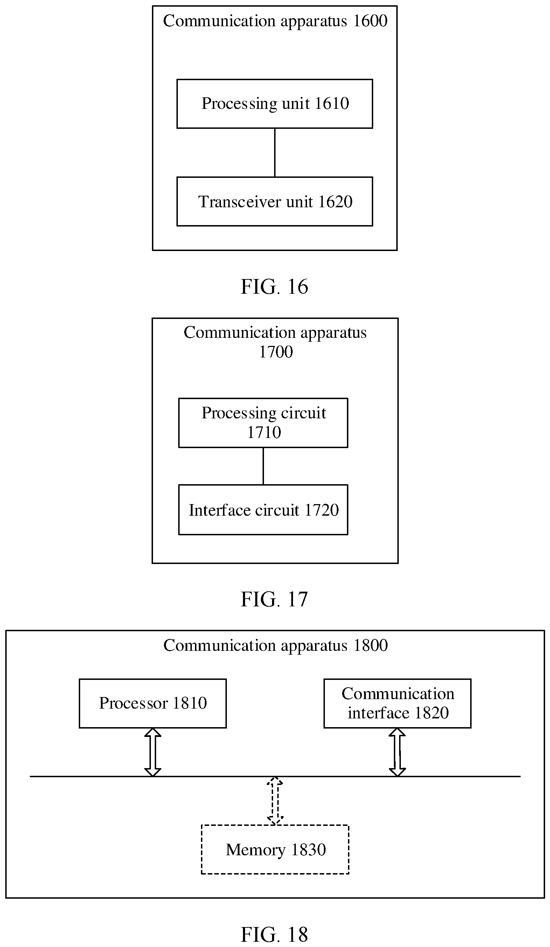

FIG. 16 is a diagram of a structure of a communication apparatus according to this application;
FIG. 17 is a diagram of a structure of another communication apparatus according to this application; and
FIG. 18 is a diagram of a structure of still another communication apparatus according to this application.

### DESCRIPTION OF EMBODIMENTS

To clearly understand technical solutions provided in this application, some nouns and terms related to the technical solutions provided in this application are first described.
(1) A CBR service may also be referred to as a CBR service signal, a CBR service stream, a CBR data stream, or the like, and includes but is not limited to a European transmission level (European transmission level 1, E1) service, a synchronous transport module level-1 (synchronous transport module level-1, STM-1) service, and a serial digital information (serial digital information, SDI) service. For ease of description, the CBR service is represented by a service in embodiments of this application.
(2) A block is a bit block including a plurality of consecutive bits, and information carried (which may also be referred to as "encapsulated" or "padded") on a block may be information carried on bits included in the block. The block in embodiments of this application may alternatively have another interchangeable name, for example, a flit (flit). In embodiments of this application, some embodiments described by using the block as an example are also applicable to a scenario of the flit.

The block in embodiments of this application may include two types: a data-type block (referred to as a data block for short below) and a control-type block (referred to as a control block for short below). A payload area (block payload) of the data block may carry an actual payload of data, and a payload area of the control block may carry control information.

The control block may be further classified into a plurality of types of blocks, for example, a start block (which may also be referred to as a head block), a termination block (which may also be referred to as a tail block), an idle (idle) block, an operations, administration and maintenance (operations, administration and maintenance, OAM) block, an error (error) block, and a low-power-consumption block.

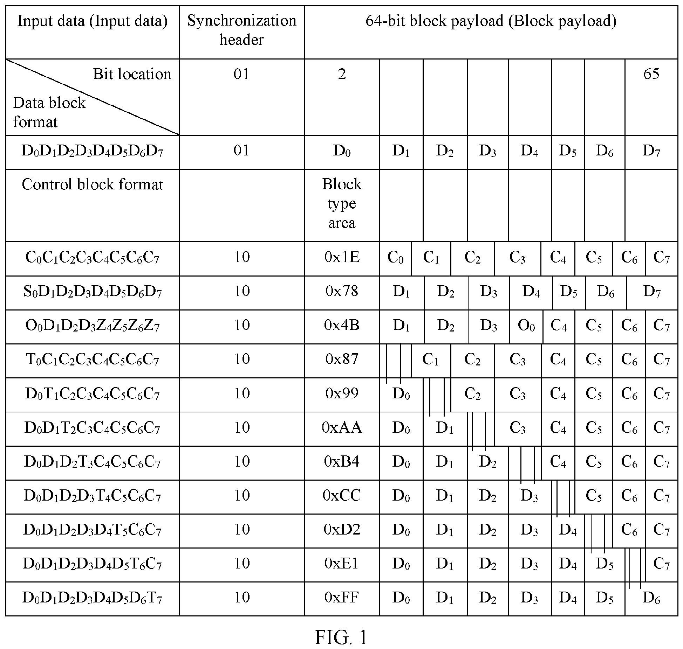

FIG. 1 is an example diagram of a structure of a block in a 64-bit (binary digit, bit or B for short)/66B encoding format defined in IEEE Std 802.3-2018 SECTION SIX. As shown in FIG. 1, a synchronization header area of the block includes the 0^{th} bit and the 1^{st} bit of the block, and has two cases: 01 and 10. A block with the synchronization header of 01 is referred to as the data block, which is denoted as a D block. A block with the synchronization header of 10 is referred to as the control block. A field D0 of the control block occupies eight bits, and may be referred to as a type (type) field of the control block.

In embodiments of this application, the start block may be a block with a synchronization header of 10 and a type field of 0x78 in FIG. 1. In this case, the start block may be denoted as an S block. In embodiments of this application, the termination block may be a block with a synchronization header of 10 and a type field of 0x87 (where the block may also be referred to as a T0 block), a block with a synchronization header of 10 and a type field of 0x99 (where the block may also be referred to as a T1 block), a block with a synchronization header of 10 and a type field of 0xAA (where the block may also be referred to as a T2 block), a block with a synchronization header of 10 and a type field of 0xB4 (where the block may also be referred to as a T3 block), a block with a synchronization header of 10 and a type field of 0xCC (where the block may also be referred to as a T4 block), a block with a synchronization header of 10 and a type field of 0xD2 (where the block may also be referred to as a T5 block), a block with a synchronization header of 10 and a type field of 0xE1 (where the block may also be referred to as a T6 block), and a block with a synchronization header of 10 and a type field of 0xFF (where the block may also be referred to as a T7 block) in FIG. 1. In this case, the termination blocks shown in FIG. 1 may all be denoted as a T block. In embodiments of this application, the OAM block may be a block with a synchronization header of 10 and a type field of 0x4B in FIG. 1. In this case, the OAM block may be denoted as an O block.

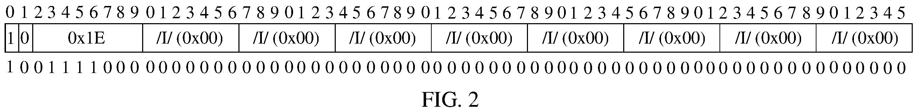

FIG. 2 shows an example of a structure form of an idle block according to this application. As shown in FIG. 2, a synchronization header area of the idle block is 10, and other content of the idle block is shown in FIG. 2. Blocks in embodiments of this application are all described by using the 64B/66B block structure form shown in FIG. 1 or FIG. 2 as an example, but embodiments of this application are also applicable to a block form, for example, 8B/10B or 256B/257B, defined in another standard.

(3) FlexE is an interface technology defined by the Optical Internetworking Forum (optical internetworking forum, OIF) to implement service isolation and network slicing, and supports services with a plurality of rates. FlexE may support the following functions (bonding, sub-rating, and channelization) by binding a plurality of 100 gigabit Ethernet (gigabit Ethernet, GE) physical (physical, PHY) interfaces and dividing each 100GE interface into 20 slots in time domain at a granularity of 5 gigabits per second (gigabits per second, Gbps). Bonding means to bond links corresponding to the plurality of PHY interfaces (PHY links for short below) into one FlexE group (which may also be referred to as a FlexE group) to support a service whose rate is greater than a single PHY interface. Sub-rating means to allocate a slot to a service to support a service whose rate is less than a bandwidth of the FlexE group or a bandwidth of the single PHY interface. Channelization means to allocate a slot to a service to support simultaneous transmission of a plurality of services in the FlexE group, for example, support simultaneous transmission of one 150 Gbps service and two 25 Gbps services in a 2*100GE FlexE group.

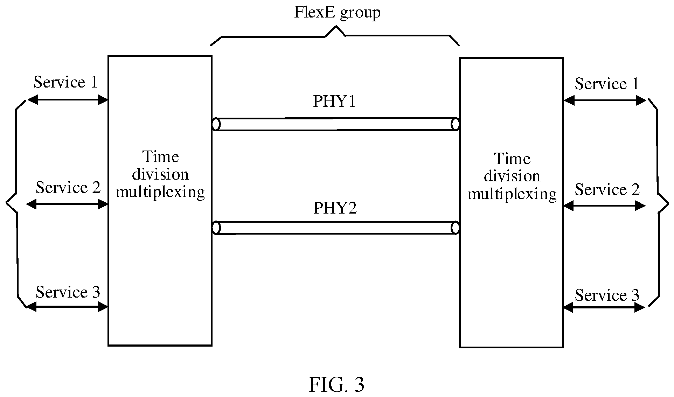

A basic function of FlexE is to map, according to a time division multiplexing (time division multiplexing, TDM) mechanism of a FlexE shim, each of U services to a FlexE group including V PHY links, where both U and V are positive integers. For example, U is 3, V is 2, and a basic architecture of FlexE may be shown in FIG. 3. In FIG. 3, three services are mapped through FlexE according to the TDM mechanism of the FlexE shim to a FlexE group including two PHY links.

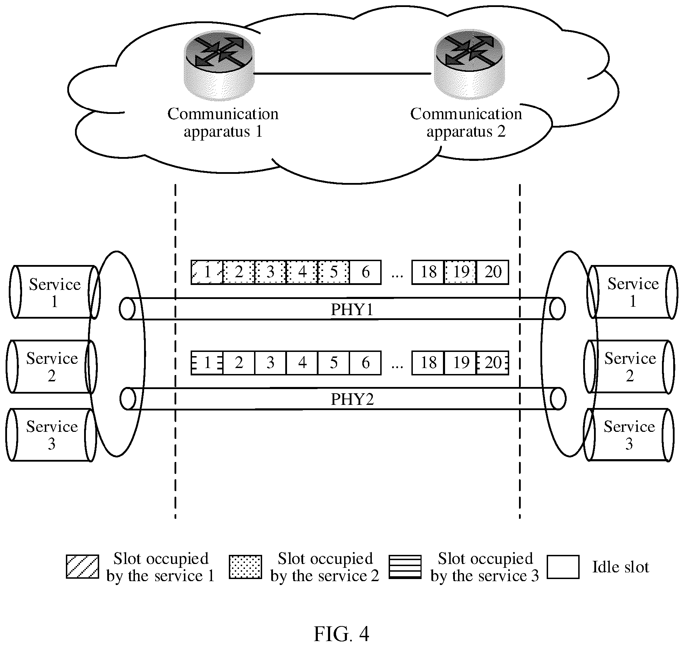

More specifically, each service is mapped to a slot that is in the FlexE group and that is allocated to a FlexE client (client) corresponding to each service. In other words, one or more services are transmitted by using the FlexE group between two communication apparatuses (a communication apparatus 1 and a communication apparatus 2 shown in FIG. 4) that perform communication through FlexE, and each service occupies one or more slots on one or more PHY links in the FlexE group.

It should be noted that the communication apparatus in embodiments of this application may be a network device, for example, a switch or a router, may be a part of components on a network device, for example, a board or a line card on the network device, may be a functional module on a network device, or may be a chip configured to implement a method in this application. This is not specifically limited in embodiments of this application. Communication apparatuses may be directly connected, for example, through an Ethernet cable or an optical cable.

The FlexE client corresponds to one block sequence obtained by encoding a service in a specific encoding (for example, 64B/66B encoding) format. At least one of a plurality of slots included in the FlexE group may be allocated to (occupied by) each FlexE client.

For example, refer to FIG. 4. In FIG. 4, using an example in which a FlexE group includes a 100GE PHY1 link and a 100GE PHY2 link, the FlexE group has a total of 40 slots, and each slot corresponds to a 5G bandwidth. PHY1 corresponds to 20 slots in the 40 slots, and PHY2 corresponds to the other 20 slots.

In FIG. 4, a service 1 occupies a 5G bandwidth, a slot 1 of PHY1 is allocated to the service 1, a service 2 occupies a 25G bandwidth, a slot 2 to a slot 5 and a slot 19 of PHY1 are allocated to the service 2, a service 3 occupies a 10G bandwidth, and a slot 1 and a slot 20 of PHY2 are allocated to the service 3.

In a specific implementation, when sending a service to a receiving end (for example, the communication apparatus 2 shown in FIG. 4), a sending end (for example, the communication apparatus 1 shown in FIG. 4) first encodes the service into a block sequence (corresponding to a FlexE client), and then maps, for transmission, the block sequence to a slot that is in a FlexE group and that is allocated to the FlexE client. After receiving the block sequence mapped to the slot in the FlexE group, the receiving end may obtain the service from the block sequence based on a mapping relationship between the FlexE client and the slot.

(4) An MTN is a new transport technology defined by Study Group 15 of the International Telecommunication Union Telecommunication Standardization Sector (ITU telecommunication standardization sector, ITU-T for short) with reference to a part of design concepts of FlexE, and includes complete transport network functions, such as interfaces, cross-connect, operations, administration and maintenance (operations, administration and maintenance, OAM), management and control, and protection. FlexE is an interface technology, and may be specific to a data center interconnect (data center interconnect, DCI) scenario. The MTN is a comprehensive transport network technology, and may be oriented to a 5G transport network.

Two layers are defined in the MTN: an MTN section layer (section layer) (which may be referred to as an MTNS for short) and an MTN path layer (path layer).

A basic function of the MTNS is similar to the basic function of FlexE, and data transmission processes are also similar. For two communication apparatuses that perform communication through the MTN, a sending end converts each of W services into a block sequence, and then maps, for transmission, the block sequence corresponding to each service to a slot that is at the MTNS and that is allocated to an MTN path (path) (which may be referred to as an MTNP for short) corresponding to the service. After receiving the block sequence mapped to the slot at the MTNS, the receiving end may obtain the service from the block sequence based on a mapping relationship between the MTNP and the slot.

The MTNP corresponds to one block sequence obtained by encoding one or more services in a specific encoding (for example, 64B/66B encoding) format. At least one of a plurality of slots included in the MTNS may be allocated to each MTNP.

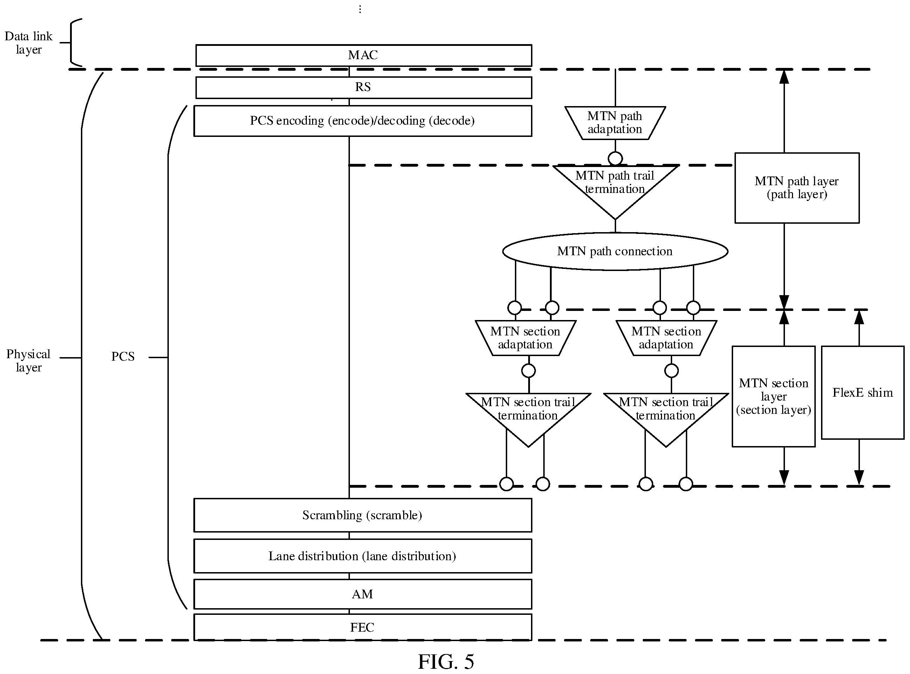

FIG. 5 is an example diagram of an architecture of a hierarchical model of an MTN protocol stack according to this application. As shown in FIG. 5, from the perspective of the protocol stack, an MTNS is equivalent to a FlexE shim in terms of functions.

A physical coding sublayer (physical coding sublayer, PCS) in FIG. 5 may include an MTN path adaptation (MTN path adaptation) layer, an MTN path trail termination (MTN path trail termination) layer functional module, an MTN path connection (MTN path connection) functional module, an MTN section adaptation (MTN section adaptation) layer functional module, and an MTN section trail termination (MTN section trail termination) functional module.

As shown in FIG. 5, a process of receiving, processing, and sending a service may be performed by a sending end from top to bottom. The service passes through a media access control (media access control, MAC) sublayer at a data link layer to enter a physical layer. At the physical layer, the service first passes through a reconciliation sublayer (reconciliation sublayer, RS) (a function of the RS is to make different medium types transparent to the MAC sublayer), and then enters an MTN path layer. After being encoded by a PCS encoding (encoding) module at the MTN path layer, the service may be referred to as a block sequence (for example, may be a 64B/66B block sequence). Further, overhead information such as OAM of an MTNP may be further inserted into the 64B/66B block sequence at the MTN path layer, and a corresponding forwarding port and slot may be found at the MTN path layer through the MTN path connection function. Then, the block sequence may enter an MTNS from the MTN path layer, and may be interleaved with another block sequence at the MTNS through rate adaptation. Overhead information such as OAM of the MTNS may be inserted into an interleaved block sequence at the MTNS, and then the block sequence enters a bottom layer at the physical layer through adaptation for transmission. After the adaptation, the block sequence is transcoded from 64B/66B to 256B/257B at a forward error correction (forward error correction, FEC) sublayer. A transcoded block sequence is sent to a PHY link for transmission, and then is sent out.

As shown in FIG. 5, a process of receiving the block sequence and processing the block sequence to obtain the service may be performed by a receiving end from bottom to top. The block sequence may be sequentially processed at a FEC sublayer, an MTNS, an MTN path layer, and the like. The process is a reverse process of the processing process performed by the sending end on the service. In a receiving process, after receiving the block sequence, the FEC sublayer of the receiving end first performs FEC error correction, and then converts an encoding format of the block sequence (for example, converts a 256B/257B block sequence into a 64B/66B block sequence). Then, the block sequence enters the MTNS, and is recovered, at an adaptation layer of the MTNS through processing and de-interleaving at the MTNS, to a 64B/66B block sequence corresponding to each single-path service. Next, each 64B/66B block sequence may be forwarded at the MTN path layer through a connection function of the MTN path layer.

(5) A fine-granularity (fine-granularity) technology may also be referred to as a tiny-granularity technology, a slicing packet network (slicing packet network, SPN) fine-granularity technology, an SPN fine-granularity technology, a fine-granularity unit (fine-granularity unit, FGU) fine-granularity technology, an MTN fine-granularity technology, or the like, and is a technology derived in the industry from FlexE/the foregoing MTN for communicating a small-bandwidth service.

In the fine-granularity technology, FGU frames are cyclically sent in a fixed periodicity by using a TDM mechanism. A quantity and locations of sub-slots (sub-slots) included in each frame are strictly fixed. Therefore, a sending periodicity of each sub-slot is also deterministic. The sub-slot is obtained by dividing a slot. One slot may be divided into a plurality of sub-slots. For example, one MTN/FlexE slot with a bandwidth of 5 Gbps may be divided into 480 sub-slots with a bandwidth of 10 megabits per second (megabits per second, Mbps). This mechanism implements division and multiplexing of the slot with a granularity of 5 Gbps. Each small-bandwidth service occupies a sub-slot that is in a strictly fixed location, and exclusively occupies a sub-slot resource. Different small-bandwidth services are strictly isolated without interference with each other. Each sub-slot has the deterministic sending periodicity. This ensures deterministic low-delay and low-jitter performance.

The fine-granularity technology includes but is not limited to: an SPN fine-granularity technology defined in China Mobile communications corporation standards (referred to as the SPN fine-granularity technology for short below) and an MTN fine-granularity technology defined by ITU (referred to as the MTN fine-granularity technology for short below). It should be noted that, in the SPN fine-granularity technology, the FGU frame may be referred to as a fine-granularity basic unit (fine-granularity basic unit, fgBU), a fine-granularity base frame, a fine-granularity single frame, or the like. In the MTN fine-granularity technology, the FGU frame may be referred to as an MTN fgBU, an MTN fine-granularity base frame, an MTN fine-granularity single frame, or the like. A format of the MTN fgBU may be the same as a format of the fgBU in the SPN fine-granularity technology. A name of an FGU frame sent by a device by using the fine-granularity technology is not specifically limited in this application.

The following describes the fgBU.

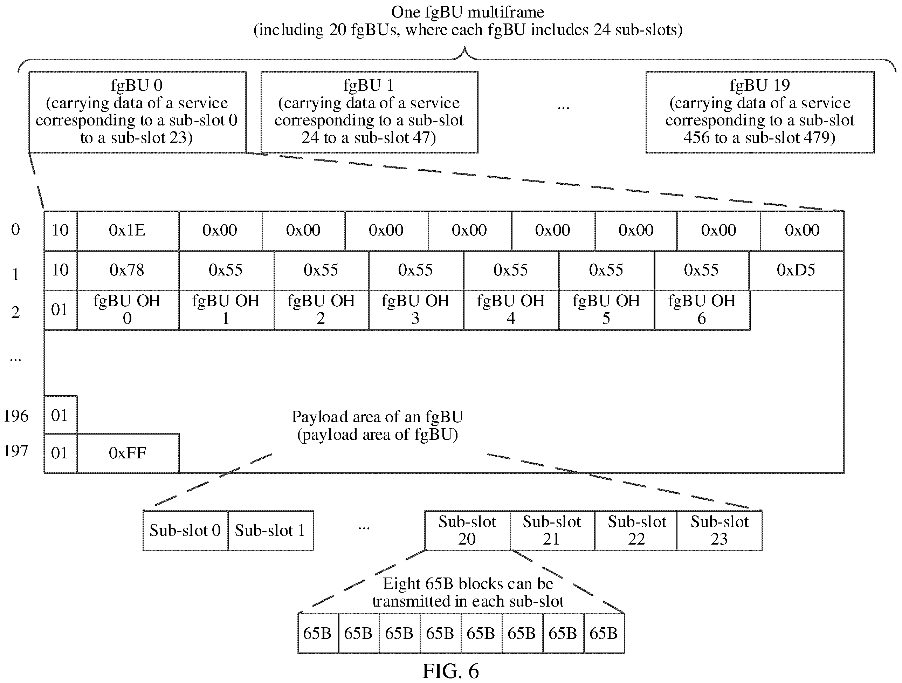

FIG. 6 is an example diagram of an fgBU according to this application. In FIG. 6, using a 100GE PHY interface as an example, the PHY interface is divided into 20 slots each with a bandwidth of 5 Gbps, and each slot is divided into 480 sub-slots with a bandwidth of 10 Mbps. As shown in FIG. 6, a format of a data stream output by one 100GE PHY interface is one fgBU multiframe, and one fgBU multiframe includes 20 fgBUs, for example, an fgBU 0 to an fgBU 19 in FIG. 6, where one fgBU includes 24 sub-slots.

As shown in FIG. 6, the fgBU has a fixed length, and includes 197 64B/66B blocks in total including one S block, 195 D blocks, and one T block. The 195 D blocks and the T block in the fgBU include a seven-byte fgBU overhead (overhead, OH for short) and a 1560-byte fgBU payload, where the fgBU OH carries overhead information of the fgBU, and the fgBU payload carries service data. The overhead information of the fgBU may include a sequence number of the fgBU, a sub-slot mapping table corresponding to a PHY link, and the like. The sequence number of the fgBU may indicate a location of the fgBU in the entire fgBU multiframe. A number of a sub-slot loaded in the fgBU may be known based on the location. The sub-slot mapping table may identify a quantity and locations of sub-slots on the PHY link that are allocated to each FlexE sub-client.

As shown in FIG. 6, in the 24 sub-slots included in the fgBU, eight 65B blocks may be transmitted in one sub-slot. The 65B block may be obtained by compressing a 2B synchronization header area in a 66B block into a 1B synchronization header. For example, a synchronization header that is 01 becomes 0 through compression, and a synchronization header that is 10 becomes 1 through compression.

In the SPN fine-granularity technology, a sending end may convert each of W small-bandwidth services into a block sequence (corresponding to a FlexE sub-client (sub-client)), and then map, according to a TDM mechanism of a FlexE shim, the block sequence to a sub-slot that is in an fgBU and that is allocated to the FlexE sub-client corresponding to each small-bandwidth service, for transmission. After receiving the block sequence mapped to the sub-slot in the fgBU, a receiving end may obtain the small-bandwidth service from the block sequence based on a mapping relationship between the FlexE sub-client and the sub-slot.

The FlexE sub-client corresponds to one block sequence obtained by encoding a small-bandwidth service in a specific encoding (for example 64B/66B encoding) format. At least one of a plurality of sub-slots included in the fgBU may be allocated to each FlexE sub-client.

In the MTN fine-granularity technology, an independent sublayer, namely, an MTN fine-granularity path (MTN fine-granularity path, MTN fg-path) layer, is added in a hierarchical manner between the MAC sublayer and the MTN path layer in the architecture of the hierarchical model of the MTN protocol stack shown in FIG. 5. The MTN path layer and the MTN fg-path layer may be decoupled, and the MTN path layer is a service layer of the MTN fg-path layer.

In the MTN fine-granularity technology, a sending end may convert each of W small-bandwidth services into a block sequence, and then map, for transmission, the block sequence corresponding to each small-bandwidth service to a sub-slot that is in an MTN fgBU and that is allocated to an MTN fg-path corresponding to each small-bandwidth service. After receiving the block sequence mapped to the sub-slot in the MTN fgBU, a receiving end may obtain the small-bandwidth service based on a mapping relationship between the MTN fg-path and the sub-slot.

The MTN fg-path corresponds to one block sequence obtained by encoding one or more small-bandwidth services in a specific encoding (for example, 64B/66B encoding) format, and at least one of a plurality of slots included in the MTN fgBU may be allocated to each MTN fg-path.

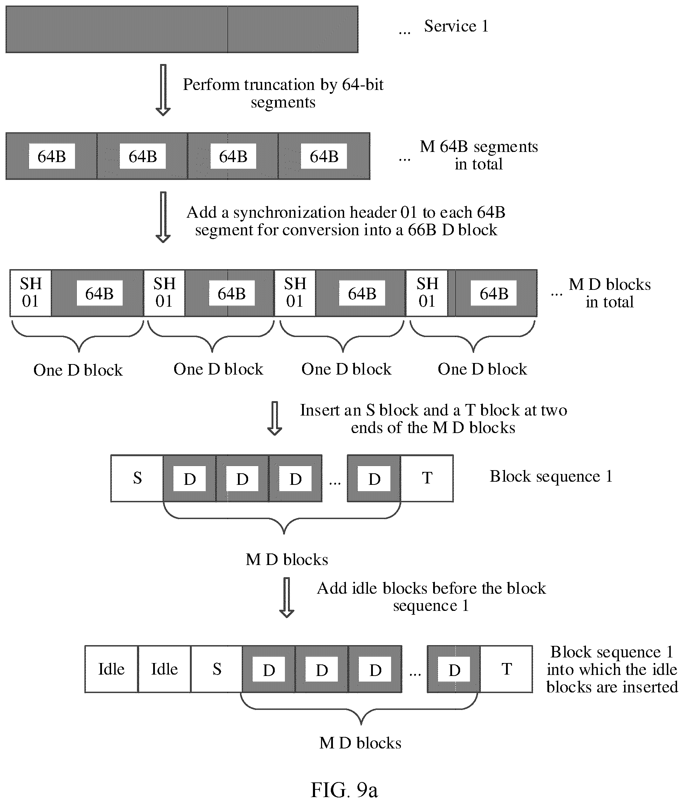

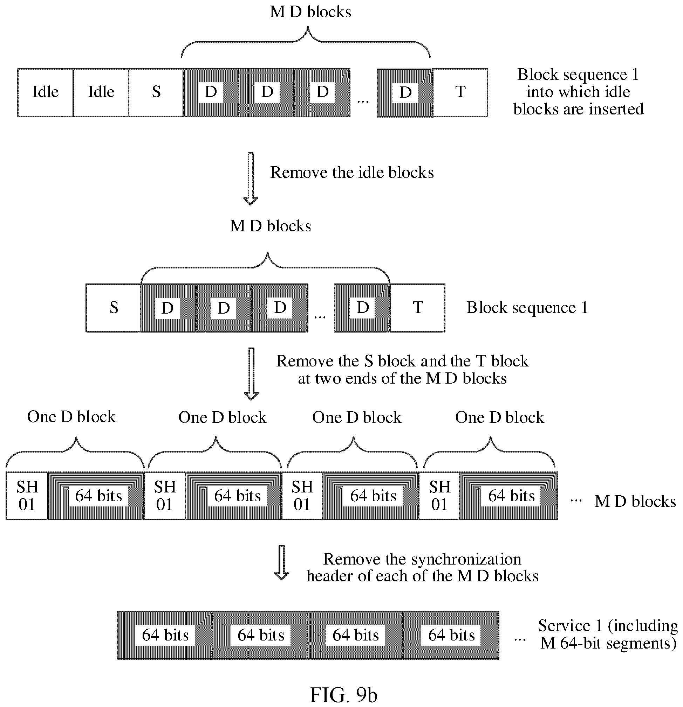

In the foregoing FlexE, MTN, and fine-granularity technologies, for a possible implementation in which a sending end converts a service into a block sequence, refer to FIG. 9a and related descriptions of FIG. 9a; and for a possible implementation in which a receiving end converts a block sequence into a service, refer to FIG. 9b and related descriptions of FIG. 9b. Details are not described herein.

(6) A large-granularity service may also be referred to as a coarse-granularity service, a large-granularity service, the foregoing large-bandwidth service, or the like, and is mainly a service carried in N (N is a positive integer) slots with a bandwidth of 5 Gbps in the foregoing FlexE/MTN technology. In some technologies, a bandwidth granularity of a slot may be 1 Gbps or the like. Using an example in which the bandwidth granularity of the slot is 1 Gbps, the large-granularity service may alternatively be a service carried in N slots with a bandwidth of 1 Gbps in these technologies. A bandwidth of the large-granularity service may be any value. However, the large-granularity service tolerates a risk of discarding some service data during transmission when the bandwidth of the large-granularity service is greater than a sum of the bandwidths of the N slots, and a bandwidth waste is caused when the bandwidth of the large-granularity service is less than the sum of the bandwidths of the N slots.

(7) A fine-granularity service may also be referred to as a small-granularity service, a tiny-granularity service, the foregoing small-bandwidth service, or the like, and is mainly a service carried in N sub-slots (for example, the foregoing sub-slot with a bandwidth granularity of 10 Mbps) in the foregoing fine-granularity technology. In some technologies, a bandwidth granularity of the sub-slot may be 100 Gbps or the like. Using an example in which the bandwidth granularity of the sub-slot is 100 Mbps, the fine-granularity service may alternatively be a service carried in N sub-slots with a bandwidth of 100 Mbps in these technologies. Similar to the bandwidth of the foregoing large-granularity service, a bandwidth of the fine-granularity service may be any value. However, the fine-granularity service tolerates a risk of discarding some service data during transmission when the bandwidth of the fine-granularity service is greater than a sum of the bandwidths of the N sub-slots, and a bandwidth waste is caused when the bandwidth of the fine-granularity service is less than the sum of the bandwidths of the N sub-slots.

Next, an application scenario of embodiments of this application is briefly described.

The technical solutions provided in embodiments of this application may be applied to transport networks implemented through FlexE and the fine-granularity technology, and may be further applied to other types of transport networks, for example, the MTN, the Ethernet, an optical transport network (optical transport network, OTN), or a synchronous digital hierarchy (synchronous digital hierarchy, SDH). For ease of description, FlexE is mainly used as an example for description in embodiments of this application.

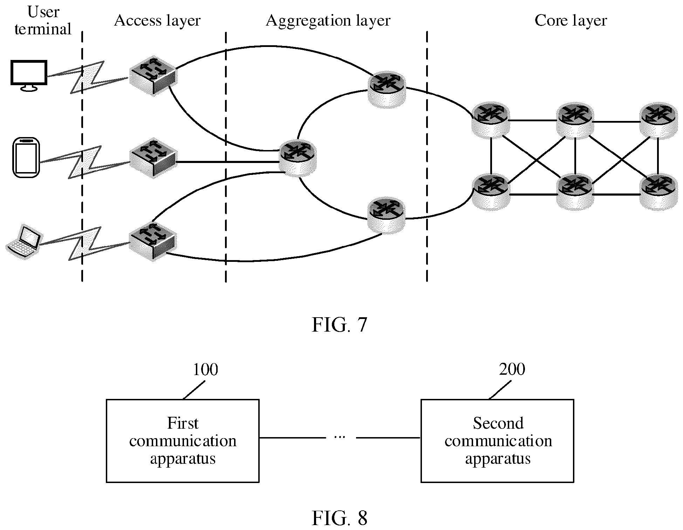

FIG. 7 is an example diagram of an architecture of a FlexE-based transport network according to this application. As shown in FIG. 7, the FlexE-based transport network includes an access layer, an aggregation layer, and a core layer.

The access layer is a part directly for a user to connect to or access the network, and a purpose of the access layer is to allow a user terminal to connect to the network.

The core layer is a high-speed switching backbone of the network, and plays a critical role in connectivity of the entire network. Because a main purpose of the core layer is to provide an optimized and reliable backbone transmission structure through high-speed forwarding communication, a communication apparatus at the core layer has high reliability and a high throughput. Generally, a communication apparatus with a large bandwidth is used at the core layer.

The aggregation layer is located between the access layer and the core layer, and is responsible for processing all traffic from the access layer and providing a link between the access layer and the core layer.

The transport network shown in FIG. 7 includes a plurality of communication apparatuses. The communication apparatus described herein may be understood as an interface device that supports FlexE. Data exchange between a user terminal and a backbone network or data exchange between user terminals can be implemented through a forwarding operation performed between the plurality of communication apparatuses.

In the communication apparatuses included in the transport network shown in FIG. 7, a communication apparatus at the core layer may be a provider (provider) device (P device for short), where the P device has a powerful switching capability and may be configured to perform high-speed switching of data streams. A communication apparatus at the aggregation layer may be a provider edge (provider edge, PE) device, and the PE device may be configured to implement a connection between the access layer and the core layer. A data stream from the core layer enters the access layer through the PE device, and a data stream from the access layer enters the core layer through the PE device. A communication apparatus at the access layer may be a customer edge (customer edge, CE) device, and the CE device is configured to provide an access service for a user terminal.

In addition, in the transport network shown in FIG. 7, interfaces between the communication apparatuses may be classified into two types: a network-to-network interface (network-to-network interface, NNI) and a user network interface (user network interface, UNI). The NNI may be an interface on the PE device and between the PE device and the P device, or may be an interface between two P devices. The UNI interface may be an interface on the PE device and between the PE device and the CE device.

As described above, the data exchange between the user terminal and the backbone network or the data exchange between the user terminals can be implemented through the forwarding operation performed between the plurality of communication apparatuses. To be specific, in the transport network shown in FIG. 7, each communication apparatus is configured to forward data, a service of the user terminal may reach a core network through the CE device and the PE device, and a service of the core network may reach the user terminal through the PE device and the CE device.

FIG. 8 is a diagram of another network architecture to which an embodiment of this application is applicable. As shown in FIG. 8, the network architecture includes a first communication apparatus 100 and a second communication apparatus 200. The first communication apparatus 100 and the second communication apparatus 200 may be directly connected, for example, through an Ethernet cable or an optical cable. Another communication apparatus may or may not exist between the first communication apparatus 100 and the second communication apparatus 200. The first communication apparatus 100 and the second communication apparatus 200 include but are not limited to network devices such as switches or routers, may be a part of components on network devices, for example, boards or line cards on the network devices, may be functional modules on network devices, or may be chips configured to implement the communication method provided in this application. This is not specifically limited in embodiments of this application.

The following provides descriptions by using an example in which the network architecture uses the transport network shown in FIG. 7.

The first communication apparatus 100 is configured to implement conversion from a service (which may also be referred to as an Ethernet frame or an Ethernet frame) into a block sequence.

The second communication apparatus 200 is configured to implement conversion from a block sequence into a service.

Specifically, the first communication apparatus 100 may convert, into a block sequence, a service received from the communication apparatus at the access layer, for transmission in the communication apparatus at the core layer. The communication apparatus at the core layer sends the block sequence to the second communication apparatus 200 at the aggregation layer. After receiving the block sequence, the second communication apparatus 200 recovers the block sequence to the service, and then sends the service to a destination terminal through the communication apparatus at the access layer. In a specific embodiment, the first communication apparatus 100 may be a PE device at the aggregation layer in FIG. 7, and the second communication apparatus 200 is another PE device at the aggregation layer. In a specific embodiment, the first communication apparatus 100 may be the communication apparatus 1 shown in FIG. 4, and the second communication apparatus 200 may be the communication apparatus 2 shown in FIG. 4.

In a specific implementation, when converting the service into the block sequence, the first communication apparatus 100 may encode the service in a specific encoding (for example, 64B/66B encoding, 8B/10B encoding, or 256B/257B encoding) format. For ease of description, in the following embodiments, an example in which the first communication apparatus 100 encodes a service in a 64B/66B encoding format to convert the service into a block sequence is used for description. However, the technical solutions provided in this application are also applicable to a scenario in which the first communication apparatus 100 encodes a service in another encoding (for example, 8B/10B encoding or 256B/257B encoding) format to convert the service into a block sequence. For a specific implementation of the technical solutions provided in this application in the foregoing other scenarios, refer to a specific implementation of the technical solutions provided in this application in the scenario corresponding to the 64B/66B encoding format. For brevity of this specification, details are not described.

In the transport network shown in FIG. 8, some services (CBR services) have a rate adaptation requirement. For example, when a rate at which the first communication apparatus 100 sends a service is greater than, for a long period of time, a rate (the rate is equal to a rate at which the communication apparatus at the access layer sends the service to the first communication apparatus 100) at which the first communication apparatus 100 receives the service, no data can be read from a cache of the first communication apparatus 100 in the long run if rate adaptation is not performed.

Currently, if the first communication apparatus 100 finds that a service has a rate adaptation requirement, before sending a block sequence to the second communication apparatus 200, the first communication apparatus 100 may insert/delete an idle block before an S block in the block sequence to perform rate adaptation, and then send, to the second communication apparatus 200, a block sequence obtained through the rate adaptation. After receiving the block sequence into which the idle block is inserted, the second communication apparatus 200 may first delete the idle block inserted before the S block in the block sequence, and then convert the block sequence into the service.

FIG. 9a is an example schematic flowchart in which the first communication apparatus 100 currently converts a service into a block sequence and inserts an idle block before an S block in the block sequence to perform service rate adaptation according to this application. FIG. 9b is an example schematic flowchart in which the second communication apparatus 200 currently deletes the idle block inserted before the S block in the block sequence and converts the block sequence into the service according to this application.

In FIG. 9a, an example in which the first communication apparatus 100 converts a service 1 into a block sequence 1, and the block sequence 1 is in a 64B/66B encoding format is used for presentation.

As shown in FIG. 9a, the service 1 is a string of bit streams. The first communication apparatus 100 may truncate the service 1 by 64-bit segments to obtain M segments, where each segment includes 64 bits.

Then, the first communication apparatus 100 places each segment of 64 bits into a payload area of a D block, to obtain M (M may be a positive integer) D blocks. This may also be understood as: The first communication apparatus 100 adds a synchronization header of 01 to each segment, to obtain a D block.

In a specific implementation, the first communication apparatus 100 may always slice the service 1 to generate a plurality of groups of D blocks. Quantities of D blocks in any two of the plurality of groups of D blocks may be equal or not equal.

Next, the first communication apparatus 100 may respectively add an S block and a T block to two ends of the M D blocks, to obtain the block sequence 1. The S block may represent a start of the block sequence, and the T block may represent an end of the block sequence.

After the block sequence 1 is obtained, if the first communication apparatus 100 finds that the service 1 has a rate adaptation requirement, the first communication apparatus 100 may insert one or more idle blocks before the S block in the block sequence 1 to perform rate adaptation (refer to a block sequence 1 into which an idle block sequence is inserted shown in FIG. 9a).

In FIG. 9b, an example in which the block sequence 1 is converted into the service 1 and is in the 64B/66B encoding format is used for presentation. FIG. 9b may be understood as a reverse process of FIG. 9a.

As shown in FIG. 9b, after receiving the block sequence 1 into which the idle blocks are inserted, the second communication apparatus 200 may remove the idle blocks to obtain the block sequence 1.

Then, the second communication apparatus 200 may remove the S block and the T block at the two ends of the D block in the block sequence 1, to obtain the M D blocks.

Then, the second communication apparatus 200 removes the synchronization header of each of the M D blocks, to obtain a string of bit streams, namely, the service 1.

However, in the foregoing method for performing rate adaptation by inserting the idle block before the S block in the block sequence, because the one or more idle blocks are inserted, delays and jitters for processing the service by the first communication apparatus 100 and the second communication apparatus 200 increase, and the increase in the delay and the jitter is a performance disadvantage that any communication apparatus needs to avoid as far as possible.

To resolve the problem of the increase in the delays and the jitters for processing the service by the first communication apparatus 100 and the second communication apparatus 200 in the foregoing method for performing rate adaptation by inserting the idle block before the S block in the block sequence, this application provides a communication method, a related apparatus, and a computer-readable storage medium. When generating a block sequence based on a service, the first communication apparatus 100 may perform rate adaptation on the service at a fine granularity (less than a length of one idle block), to decrease the delays and jitters for processing the service by the first communication apparatus 100 and the second communication apparatus 200, and improve performance of the first communication apparatus 100 and the second communication apparatus 200.

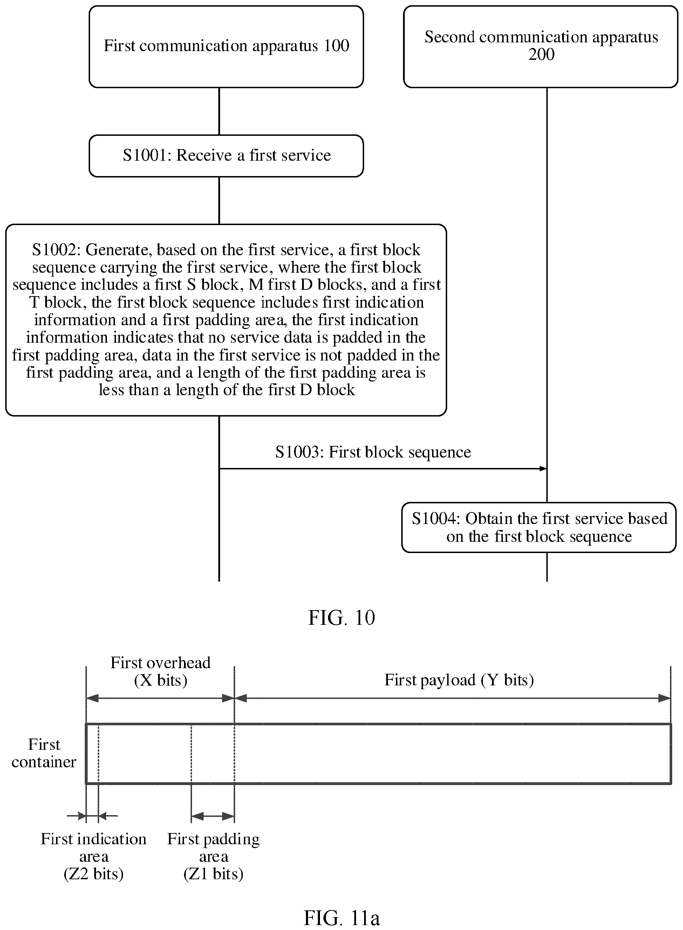

FIG. 10 is a diagram of interaction in a communication method according to this application. As shown in FIG. 10, the communication method provided in this application includes the following steps.

S1001: A first communication apparatus 100 receives a first service.

S1002: The first communication apparatus 100 generates, based on the first service, a first block sequence carrying the first service, where the first block sequence includes a first S block, M first D blocks, and a first T block, the first block sequence includes first indication information and a first padding area, the first indication information indicates that no service data is padded in the first padding area, data in the first service is not padded in the first padding area, and a length of the first padding area is less than a length of the first D block.

S1003: The first communication apparatus 100 sends the first block sequence to a second communication apparatus 200. Correspondingly, the second communication apparatus 200 receives the first block sequence sent by the first communication apparatus 100.

S1004: The second communication apparatus 200 obtains the first service based on the first block sequence.

The following describes a service and a block sequence in embodiments of this application.

Embodiments of this application involve a plurality of services such as the first service, a second service, a third service, and a fourth service. All these services may include but are not limited to an E1 service, an STM-1 service, and an SDI service.

Embodiments of this application involve a plurality of block sequences such as the first block sequence and a second block sequence. These block sequences each include one S block, M D blocks, and one T block. M may be determined based on a rate at which a service is actually transmitted. For example, for services, such as the E1 service (a rate usually fluctuates around 2.048 Mbps within a very small range) and a T1 service (a rate usually fluctuates around 1.544 Mbps within a very small range), with a very small rate, M=2. For example, for services, such as the STM-1 service (a rate usually fluctuates around 155 Mbps within a very small range), with a slightly larger rate, M=123. For a service with a much larger rate, M may be set to a larger value.

When no service data is padded in the first padding area, data, for example, a fixed pattern that is all 0s or all 1s, other than the service data may be padded; or other data, for example, location information of the first padding area in the first block sequence or location information of the first indication information in the first block sequence, may be padded. Optionally, a fixed pattern may be padded in a part of the first padding area, and other data is padded in the other part of the first padding area. For ease of description, an example in which a fixed pattern is padded when no service data is padded in a padding area (for example, the first padding area or a third padding area described below) is used for description in the following embodiments.

Because an area (namely, the first padding area) in the first block sequence generated by the first communication apparatus 100 based on the first service does not carry the first service, it can be learned that, in this way, an amount of data that is of the first service and that is carried in the first block sequence can decrease, so that a rate at which the first communication apparatus 100 sends the first service to the second communication apparatus 200 is reduced, to achieve a rate adaptation effect.

In addition, because the length of the first padding area is less than the length of the first data block, and the length of the first data block is equal to a length of one idle block, when the first communication apparatus 100 generates the first block sequence based on the first service, rate adaptation at a granularity less than the length of the idle block is equivalently performed on the first service once. Compared with a case, shown in FIG. 9a, in which the first communication apparatus 100 needs to insert an idle block before an S block in a block sequence to implement service rate adaptation, this can reduce a delay and a jitter for service processing performed by the first communication apparatus 100.

It can be further learned that because the first block sequence sent by the first communication apparatus 100 to the second communication apparatus 200 includes the first indication information and the first padding area, and the first indication information indicates that no service data is padded in the first padding area, after receiving the first block sequence, the second communication apparatus 200 may obtain the first indication information, and learn, based on the first indication information, that no service data is padded in the first padding area. Then, the second communication apparatus 200 may discard the fixed pattern padded in the first padding area, and obtain the first service from a remaining area in the first block sequence.

Because the length of the first padding area is less than the length of the first D block, and the length of the first D block is equal to the length of the idle block, compared with a case, shown in FIG. 9b, in which the second communication apparatus 200 needs to first delete an idle block inserted before an S block in a block sequence to obtain a service, this can reduce a delay and a jitter for service processing performed by the second communication apparatus 200.

The following describes the steps shown in FIG. 10 in detail.

In S1001, the first service received by the first communication apparatus 100 may be a service directly sent by a first source end to the first communication apparatus 100, or may be a service sent by a first source end to another communication apparatus and forwarded by the another communication apparatus to the first communication apparatus 100. This is not specifically limited herein.

In S1002, the first communication apparatus 100 may generate, based on the first service by using the following steps A1 to A3, the first block sequence carrying the first service:
A1: Extract first data from the first service.
A2: Obtain a first container, where the first container includes the first data, the first indication information, and the first padding area.
A3: Encode the first container to obtain the first block sequence.

In this application, a specific implementation process of S1004 may be a reverse process of S1002, and may be the following steps B1 to B3:
B1: Decode the first block sequence to obtain the first container.
B2: Obtain the first indication information from the first container.
B3: Obtain the first data from the first container based on the first indication information.

First, the first container in embodiments of this application is described.

The first container is an encapsulation structure with a fixed length W provided in this application, and is for encapsulating the first service. The first container includes a first overhead (which may also be referred to as a container overhead or a container overhead area, and has a length of X bits, where X is a positive integer) and a first payload (which may also be referred to as a container payload or a container payload area, and has a length of Y bits, where Y is a positive integer). W may be equal to a sum of lengths of payload areas of the M first D blocks in the first block sequence, in other words, W=X+Y=M*64. FIG. 11a is an example diagram of a structure of a first container according to this application.

One indication area with a fixed length (Z2 bits, where Z2 is a positive integer, and may be set to a small value, for example, 1 or 2) may be set in a first overhead, and is referred to as a first indication area below. One padding area with a fixed length (Z1 bits, where Z1 is an integer greater than 0 and less than 66) may be set in the first overhead, and is referred to as a first padding area below. Continue to refer to FIG. 11a.

It should be understood that the first container shown in FIG. 11a is merely used as an example. For example, in a specific implementation, the first indication area may be adjacent to the first padding area, or a sum Z1+Z2 of the lengths of the first indication area and the first padding area is exactly equal to a length X of the first overhead. A location and a length of each area in the first container are not specifically limited in this application.

Optionally, the first padding area may be set in the first payload. Alternatively, a part of the first padding area may be set in the first overhead, and the other part is set in the first payload. This is not specifically limited in this application. For ease of description, an example in which the first padding area is set in the first overhead is used in the following embodiments for description.

In the embodiment shown in FIG. 10, the first payload is for encapsulating (carries) the first service. The first padding area is padded with the fixed pattern instead of the data in the first service, in other words, is not for encapsulating the first service. The first indication area is for encapsulating the first indication information indicating that no service data is padded in the first padding area.

As shown in FIG. 11a, in this embodiment of this application, if there is a remaining area other than the first indication area and the first padding area in the first overhead, the remaining area may carry overhead information corresponding to the first container, for example, location information of the first overhead in the first container or location information of the first payload in the first container.

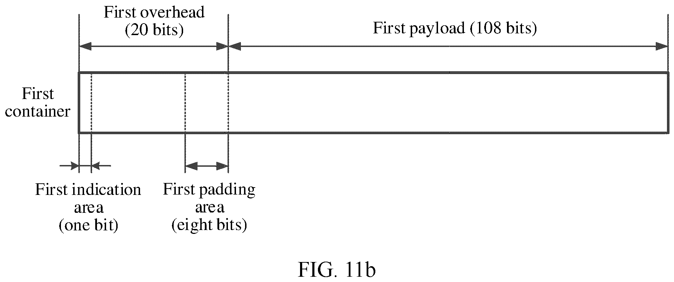

Based on the foregoing content, FIG. 11b is an example diagram of a structure of a first container according to this application. In FIG. 11b, a length of the first container is 128 bits, a length of a first overhead is 20 bits, a length of a first payload is 108 bits, a length of a first indication area is one bit, and a length of a first padding area is eight bits.

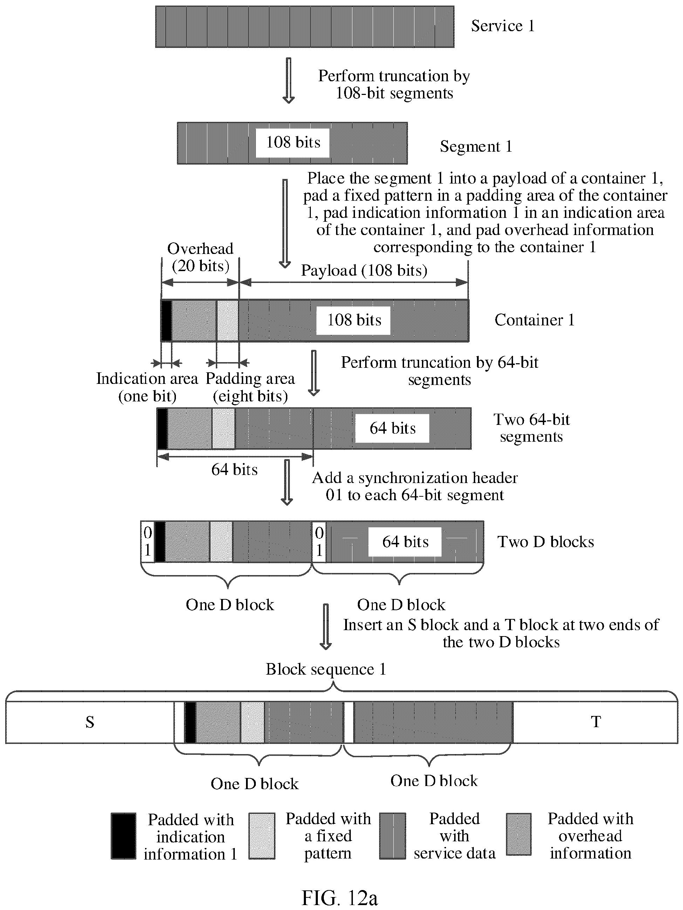

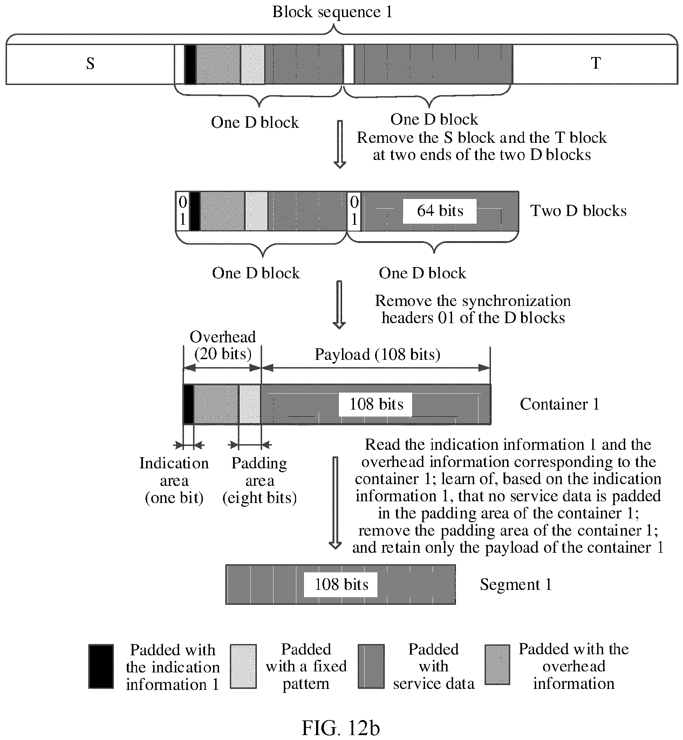

Based on the foregoing content, FIG. 12a is an example diagram of a process of generating a first container based on a first service and encoding the first container to obtain a first block sequence according to this application, and FIG. 12b is an example diagram of a process of decoding the first block sequence to obtain the first container and obtaining the first service from the first container according to this application.

In FIG. 12a and FIG. 12b, an example in which M is 2, a service 1 represents the first service, a container 1 represents the first container, a block sequence 1 represents the first block sequence and is a block sequence in a 64B/66B encoding format, and the container 1 is the container shown in FIG. 11b is used for presentation.

As shown in FIG. 12a, the service 1 is a string of bit streams. The first communication apparatus 100 may slice the service 1 by 108-bit segments to obtain a segment 1, and the segment 1 includes 108 bits.

Then, the first communication apparatus 100 places the segment 1 into a payload of the container 1, pads a fixed pattern in a padding area of the container 1, pads, in an indication area of the container 1, indication information 1 indicating that no service data is padded in the padding area of the container 1, and pads, in a remaining area other than the padding area and the indication area in an overhead of the container 1, overhead information corresponding to the container 1.

Then, the first communication apparatus 100 may truncate the container 1 by 64-bit segments, to obtain two segments, where each segment includes 64 bits.

Next, the first communication apparatus 100 places each segment of 64 bits into a payload area of a D block, to obtain two D blocks.

Later, the first communication apparatus 100 may respectively add an S block and a T block to two ends of the two D blocks, to obtain the block sequence 1.

As shown in FIG. 12b, after receiving the block sequence 1, the second communication apparatus 200 may remove the S block and the T block at the two ends of the D blocks in the block sequence 1, to obtain the two D blocks.

Then, the second communication apparatus 200 removes synchronization headers 01 of the two D blocks to obtain the container 1.

Next, the second communication apparatus 200 reads the indication information 1 in the indication area of the container 1 and the overhead information corresponding to the container 1, and learns, based on the indication information 1, that no service data is padded in the padding area of the container 1. In this case, the second communication apparatus 200 removes the padding area of the container 1, and retains only the payload of the container 1. It may be understood that a string of bit streams corresponding to the retained payload of the container 1 is the segment 1, and obtaining the segment 1 is equivalent to obtaining the service 1.

In this application, a process of obtaining a container (for example, the foregoing container 1 and the following container 2) based on a service (for example, the foregoing service 1 and the following service 2) may be referred to as a process of encapsulating the service, and a process of obtaining a block sequence (for example, the foregoing block sequence 1 and the following block sequence 2) based on a container (for example, the foregoing container 1 and the following container 2) may be referred to as a process of encoding (also referred to as encapsulating) the container.

In this application, a process of obtaining a container (for example, the foregoing container 1 and the following container 2) based on a block sequence (for example, the foregoing block sequence 1 and the following block sequence 2) may be referred to as a process of decoding (also referred to as decapsulating) the block sequence, and a process of obtaining a service (for example, the foregoing service 1 and the following service 2) based on a container (for example, the foregoing container 1 and the following container 2) may be referred to as a process of decapsulating the container.

In S1003:
Using an example in which the first service is a large-granularity service, and the first communication apparatus 100 communicates with the second communication apparatus 200 through FlexE, a specific implementation process of S1003 may be: Assuming that the first block sequence belongs to a first FlexE client, the first communication apparatus 100 may map, for transmission, the first FlexE client to at least one slot that is in a FlexE group and that is allocated to the first FlexE client. Correspondingly, the second communication apparatus 200 receives the first block sequence mapped to the at least one slot that is in the FlexE group and that is allocated to the first FlexE client, and then obtains the first service based on the first block sequence.

Using an example in which the first service is a large-granularity service, and the first communication apparatus 100 communicates with the second communication apparatus 200 through an MTN, a specific implementation process of S1003 may be: Assuming that the first block sequence belongs to a first MTNP, the first communication apparatus 100 may map, for transmission, the first MTNP to at least one slot that is at an MTNS and that is allocated to the first MTNP. Correspondingly, the second communication apparatus 200 receives the first block sequence mapped to the at least one slot that is at the MTNS and that is allocated to the first MTNP, and then obtains the first service based on the first block sequence.

Using an example in which the first service is a fine-granularity service, and the first communication apparatus 100 communicates with the second communication apparatus 200 by using an SPN fine-granularity technology, a specific implementation process of S1003 may be: Assuming that the first block sequence belongs to a first FlexE sub-client, the first communication apparatus 100 may map, for transmission, the first FlexE sub-client to at least one sub-slot that is in an fgBU and that is allocated to the first FlexE sub-client. Correspondingly, the second communication apparatus 200 receives the first block sequence mapped to the at least one sub-slot that is in the fgBU and that is allocated to the first FlexE sub-client, and then obtains the first service based on the first block sequence.

Using an example in which the first service is a fine-granularity service, and the first communication apparatus 100 communicates with the second communication apparatus 200 by using an MTN fine-granularity technology, a specific implementation process of S1003 may be: Assuming that the first block sequence belongs to a first MTN fg-path, the first communication apparatus 100 may map, for transmission, the first MTN fg-path to at least one sub-slot that is in an MTN fgBU and that is allocated to the first MTN fg-path. Correspondingly, the second communication apparatus 200 receives the first block sequence mapped to the at least one sub-slot that is in the MTN fgBU and that is allocated to the first MTN fg-path, and then obtains the first service based on the first block sequence.

When the first communication apparatus 100 communicates with the second communication apparatus 200 by using different technologies, for a further specific implementation process of sending the first block sequence, refer to the descriptions of the technologies in the foregoing concept term part. For brevity of this specification, details are not described herein again.

It may be understood that during actual application, the first communication apparatus 100 may continuously receive a bit stream of the first service in a period of time. If the first service always has a rate adaptation requirement, the first communication apparatus 100 may continuously process the received bit stream of the first service according to steps S1001 to S1003 in the method embodiment shown in FIG. 10, to generate the first block sequence, and then send the first block sequence to the second communication apparatus 200 until the rate adaptation requirement of the first service is met.

However, after the rate adaptation requirement of the first service is met, the first communication apparatus 100 may continue to receive a bit stream of the first service, and needs to send the bit stream of the first service to the second communication apparatus 200. In this case, the first communication apparatus 100 may stop processing, according to S1001 to S1003 in the method embodiment shown in FIG. 10, the subsequently received bit stream of the first service that has no rate adaptation requirement, in other words, stop performing rate adaptation on the first service, but process the first service with reference to the process of processing the service 1 to generate the block sequence 1 for transmission shown in FIG. 9a, or process the first service for transmission with reference to a process of processing a second service for transmission in S1301 to S1303 in a method embodiment shown in FIG. 13. This is not specifically limited in this application.

If the first communication apparatus 100 finds again, in a process of processing and sending the subsequently received bit stream of the first service with reference to FIG. 9a or S1301 to S1303 in the method embodiment shown in FIG. 13, that the first service has a rate adaptation requirement, the first communication apparatus 100 may process and send the first service again according to steps S1001 to S1003 in the method embodiment shown in FIG. 10, to implement rate adaptation on the first service. The rest can be deduced by analogy until the entire first service is completely sent.

In embodiments of this application, the first communication apparatus 100 determines, in a plurality of manners, whether the first service has the rate adaptation requirement. For details, refer to related descriptions of the following manner 1, manner 2, and manner 3.

FIG. 13 is a schematic flowchart of another communication method according to this application. As shown in FIG. 13, the another communication method according to this application includes the following steps.

S1301: A first communication apparatus 100 receives a second service.

S1302: The first communication apparatus 100 generates, based on the second service, a second block sequence carrying the second service, where the second block sequence includes a second S block, M second D blocks, and a second T block, the second block sequence includes second indication information and a second padding area, the second indication information indicates that service data is padded in the second padding area, data in the second service is padded in the second padding area, and a length of the second padding area is less than a length of the second D block.

S1303: The first communication apparatus 100 sends the second block sequence to a second communication apparatus 200. Correspondingly, the second communication apparatus 200 receives the second block sequence.

S1304: The second communication apparatus 200 obtains the second service based on the second block sequence.

Because a padding area (namely, the second padding area) in the second block sequence generated by the first communication apparatus 100 based on the second service carries the data in the second service, it can be learned that, in this way, an amount of data that is of the second service and that is carried in the second block sequence does not decrease, and therefore a rate at which the first communication apparatus 100 sends the second service to the second communication apparatus 200 is not reduced. In this solution, transmission of a service can be performed when the service has no rate adaptation requirement.

Because the second block sequence sent by the first communication apparatus 100 to the second communication apparatus 200 includes the second indication information and the second padding area, and the second indication information indicates that the service data is padded in the second padding area, after receiving the second block sequence, the second communication apparatus 200 may learn, based on the second indication information, that the service data is padded in the second padding area. Then, when obtaining the second service from the second block sequence, the second communication apparatus 200 retains the service data padded in the second padding area, and then obtains the second service from a remaining area and the retained second padding area in the second block sequence, to implement service transmission.

It can be learned that, for a bit stream that is of the first service having no rate adaptation requirement and that is subsequently received by the first communication apparatus 100, the first service is processed and sent with reference to the process of processing and sending the second service in S1301 to S1303 in the method embodiment shown in FIG. 13. In this way, the first communication apparatus 100 may stop performing rate adaptation on the first service.

The following describes the steps shown in FIG. 13 in detail.

In S1302, the first communication apparatus 100 may generate the second block sequence based on the second service with reference to the following steps C1 to C3:
C1: Extract second data from the second service.
C2: Obtain a second container, where the second container includes a part of the second data, the second indication information, and the second padding area, and remaining data in the second data is padded in the second padding area.
C3: Encode the second container to obtain the second block sequence.

In this application, a specific implementation process of S1304 may be a reverse process of S1302, and may be the following steps D1 to D3:
D1: Decode the second block sequence to obtain the second container.
D2: Obtain the second indication information from the second container.
D3: Obtain the second data from the second container based on the second indication information.

In the embodiment shown in FIG. 13, a structure of the second container is the same as a structure of a first container, to be specific, the second container includes a second overhead and a second payload, and the second overhead includes the second padding area and a second indication area. The second payload carries the second service. The second padding area is not padded with a fixed pattern, but is padded with the data in the second service, in other words, carries the second service. The second indication area carries the second indication information indicating that the service data is padded in the second padding area.

Based on the foregoing content, FIG. 12c-1 and FIG. 12c-2 are an example diagram of a process of generating a second container based on a second service and encoding the second container to obtain a second block sequence according to this application, and FIG. 12d-1 and FIG. 12d-2 are an example diagram of a process of decoding the second block sequence to obtain the second container and obtaining the second service from the second container according to this application.

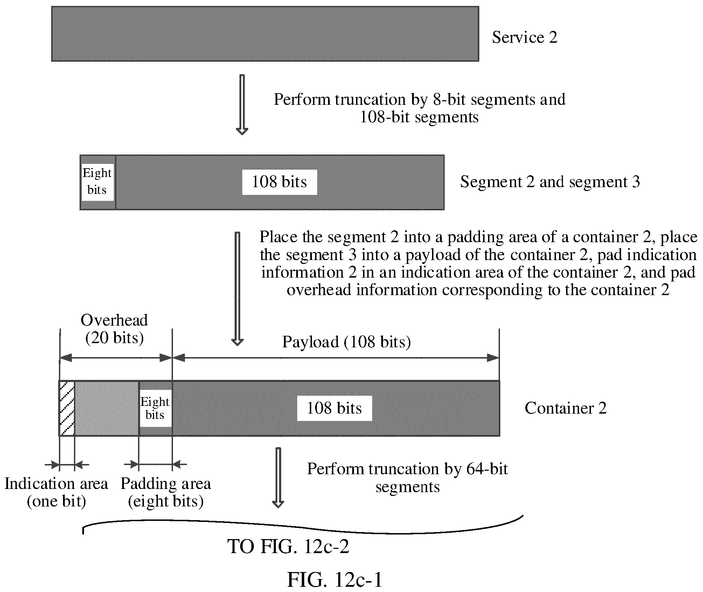

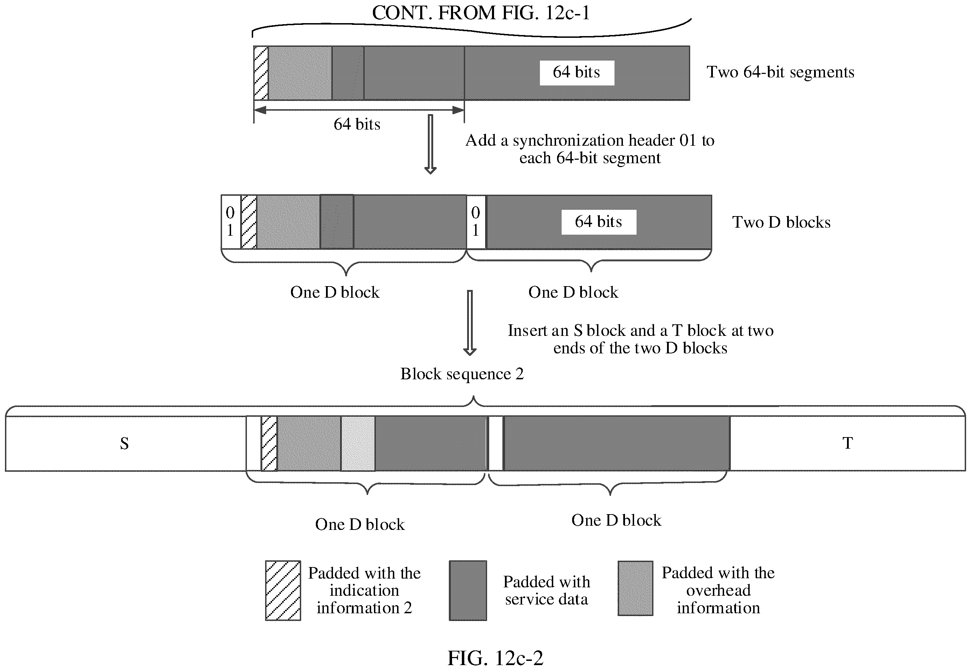

In FIG. 12c-1 to FIG. 12d-2, an example in which M is 2, a service 2 represents the second service, a container 2 represents the second container, a block sequence 2 represents the second block sequence and is a block sequence in a 64B/66B encoding format, and the container 2 is the container shown in FIG. 11b is used for presentation.

As shown in FIG. 12c-1 and FIG. 12c-2, the service 2 is a string of bit streams. The first communication apparatus 100 may slice the service 2 by 8-bit segments and by 108-bit segments, to obtain a segment 2 and a segment 3. The segment 2 includes eight bits, and the segment 3 includes 108 bits.

Then, the first communication apparatus 100 places the segment 2 into a padding area of the container 2, places the segment 3 into a payload of the container 2, pads, in an indication area of the container 2, indication information 2 indicating that service data is padded in the padding area of the container 2, and pads, in a remaining area other than the padding area and the indication area in an overhead of the container 2, overhead information corresponding to the container 2.

Then, the first communication apparatus 100 may truncate the container 2 by 64-bit segments, to obtain two segments, where each segment includes 64 bits.

Next, the first communication apparatus 100 places each segment of 64 bits into a payload area of a D block, to obtain two D blocks.

Later, the first communication apparatus 100 may respectively add an S block and a T block to two ends of a group of D blocks, to obtain the block sequence 2.

As shown in FIG. 12d-1 and FIG. 12d-2, after receiving the block sequence 2, the second communication apparatus 200 may remove the S block and the T block at the two ends of the D blocks in the block sequence 2, to obtain the two D blocks.

Then, the second communication apparatus 200 removes a synchronization header 01 of each of the two D blocks, to obtain the container 2.

Next, the second communication apparatus 200 reads the indication information 2 in the indication area of the container 2 and the overhead information corresponding to the container 2, and learns, based on the indication information 2, that the service data is padded in the padding area of the container 2. In this case, the second communication apparatus 200 retains the padding area of the container 2 and the payload of the container 2. It may be understood that a string of bit streams corresponding to the retained padding area of the container 2 is the segment 2, a string of bit streams corresponding to the retained payload of the container 2 is the segment 3, and obtaining the segment 2 and the segment 2 is equivalent to obtaining the service 2.

In S1303, a specific process in which the first communication apparatus 100 sends the second block sequence to the second communication apparatus 200 is similar to the specific process in which the first communication apparatus 100 sends the first block sequence to the second communication apparatus 200 in S1003. For details, refer to the foregoing related descriptions of S1003. For brevity of this specification, the details are not described herein.

In the foregoing embodiments (the method embodiment shown in FIG. 10 and the method embodiment shown in FIG. 13), the communication method provided in this application is described by using an example in which the first communication apparatus 100 receives one service (for example, the first service and the second service). In the communication method provided in this application, the first communication apparatus 100 may alternatively receive a plurality of services. For example, before S1002/S1302, the first communication apparatus 100 may further receive more services such as a third service, a fourth service, and a fifth service in addition to the first service/second service. In a possible implementation, the first service/second service and the more services such as the third service, the fourth service, and the fifth service are sent to the first communication apparatus 100 by a same source end, and destination terminals of the first service/second service and the more services such as the third service, the fourth service, and the fifth service are the same. To be specific, the first service/second service and the more services such as the third service, the fourth service, and the fifth service have a same source address and a same destination address.

In a possible embodiment, in S1002/S1302, the first communication apparatus 100 may generate the first block sequence/second block sequence based on the first service and the more services such as the third service, the fourth service, and the fifth service. In addition to carrying the first service, the first block sequence/second block sequence herein may further carry the more services such as the third service, the fourth service, and the fifth service. Then, the first communication apparatus 100 sends, to the second communication apparatus 200, the first block sequence/second block sequence carrying the plurality of services. Correspondingly, after receiving the first block sequence/second block sequence carrying the plurality of services, the second communication apparatus 200 may obtain the plurality of services from the first block sequence/second block sequence.

To improve flexibility of this solution, possible implementations in which the first communication apparatus generates, based on the plurality of services, the first block sequence/second block sequence carrying the plurality of services and sends the first block sequence/second block sequence include but are not limited to data transmission manners shown in FIG. 14a, FIG. 14b, and FIG. 14c.

FIG. 14a is a diagram of interaction in another communication method according to this application. As shown in FIG. 14a, the method includes the following steps.

S1401: A first communication apparatus 100 receives a first service and a third service.

S1402: The first communication apparatus 100 generates, based on the first service and the third service, a first block sequence carrying the first service and the third service, where the first block sequence includes not only first indication information and a first padding area but also third indication information and a third padding area, the third indication information indicates that no service data is padded in the third padding area, data in the third service is not padded in the third padding area, and a sum of lengths of the first padding area and the third padding area is less than a length of a first D block.

S1403: The first communication apparatus 100 sends, to a second communication apparatus 200, the first block sequence carrying the first service and the third service.

S1404: The second communication apparatus 200 obtains the first service and the third service based on the first block sequence carrying the first service and the third service.

FIG. 14b is a diagram of interaction in another communication method according to this application. As shown in FIG. 14b, the method includes the following steps.

S1410: A first communication apparatus 100 receives a first service and a fourth service.

S1420: The first communication apparatus 100 generates, based on the first service and the fourth service, a first block sequence carrying the first service and the fourth service, where the first block sequence includes not only first indication information and a first padding area but also fourth indication information and a fourth padding area, the fourth indication information indicates that service data is padded in the fourth padding area, data in the fourth service is padded in the fourth padding area, and a sum of lengths of the first padding area and the fourth padding area is less than a length of a first D block.

S1430: The first communication apparatus 100 sends, to a second communication apparatus 200, the first block sequence carrying the first service and the fourth service.

S1440: The second communication apparatus 200 obtains the first service and the fourth service based on the first block sequence carrying the first service and the fourth service.

FIG. 14c is a diagram of interaction in another communication method according to this application. As shown in FIG. 14c, the method includes the following steps.

S141: A first communication apparatus 100 receives a second service and a fifth service.

S142: The first communication apparatus 100 generates, based on the second service and the fifth service, a second block sequence carrying the second service and the fifth service, where the second block sequence includes not only second indication information and a second padding area but also fifth indication information and a fifth padding area, the fifth indication information indicates that service data is padded in the fifth padding area, data in the fifth service is padded in the fifth padding area, and a sum of lengths of the second padding area and the fifth padding area is less than a length of a second D block.

S143: The first communication apparatus 100 sends, to a second communication apparatus 200, the second block sequence carrying the second service and the fifth service.

S144: The second communication apparatus 200 obtains the second service and the fifth service based on the second block sequence carrying the second service and the fifth service.

It can be learned that, in the communication methods shown in FIG. 14a, FIG. 14b, and FIG. 14c, one block sequence can carry a plurality of services. Using an example in which the first communication apparatus 100 communicates with the second communication apparatus 200 by using an SPN fine-granularity technology, it may be understood that when one block sequence carries a plurality of services, the plurality of services can be simultaneously transmitted in at least one sub-slot that is in an fgBU and that is allocated to one FlexE sub-client (for example, the foregoing first FlexE sub-client). Compared with a current case in which only one service can be transmitted in a sub-slot allocated to one FlexE sub-client, this can reduce a bandwidth waste and improve bandwidth utilization when a bandwidth (for example, 2.048 Mbps) of a service is far less than a sum (for example, 10 Mbps) of bandwidths of sub-slots allocated to the FlexE sub-client.

The following uses the method embodiment shown in FIG. 14a as an example to describe in detail the several embodiments shown in FIG. 14a to FIG. 14c.

In S 1402, the first communication apparatus 100 may extract third data from the first service, extract fourth data from the third service, then obtain a first container including the third data, the fourth data, the first indication information, the third indication information, the first padding area, and the third padding area, and encode the first container to obtain the first block sequence carrying the first service and the third service.

In this embodiment, two indication areas with a fixed length (Z2 bits) may be set in a first overhead in the first container, where the two indication areas are referred to as a first indication area and a third indication area below. Two padding areas with a fixed length (Z1 bits, where 2*Z1<66) may be set in the first overhead, where the two padding areas are referred to as the first padding area and the third padding area below. A first payload in the first container may be divided into two sub-payloads with equal lengths that are referred to as a first sub-payload and a second sub-payload below.

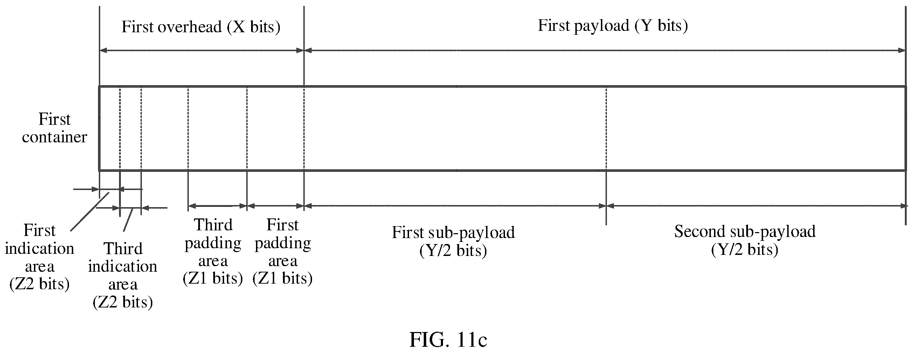

The first sub-payload carries the first service, the second sub-payload carries the third service, the first padding area and the third padding area are both padded with a fixed pattern, the first indication area carries the first indication information indicating that no service data is padded in the first padding area, and the third indication area carries the third indication information indicating that no service data is padded in the third padding area. FIG. 11c is an example diagram of a structure of another first container according to this application.

It should be understood that the first container shown in FIG. 11c is merely used as an example. In a specific implementation, the first container may alternatively be in another structure. For example, in a specific implementation, the first indication area may be in the middle of the first padding area and the third padding area, the first sub-payload may be a 1^{st} bit to a Y/4^{th} bit and a (2Y+1)/4^{th} bit to a 3Y/4^{th} bit in Y bits of the first payload, and the second sub-payload may be a (Y+1)/4^{th} bit to a Y/2^{th} bit and a (3Y+1)/4^{th} bit to a Y^{th} bit. The structure of the first container is not specifically limited in this application.

Optionally, both the two padding areas (namely, the first padding area and the third padding area) in the first container may be set in the first payload; or one of the two padding areas may be set in the first overhead, and the other may be set in the first payload. This is not specifically limited in this application. When a padding area is set in the first payload, an area other than the padding area in the first payload may be divided into two sub-payloads with equal lengths. One of the two sub-payloads carries the first service, and the other sub-payload carries the third service.

For ease of description, an example, shown in FIG. 11c, in which the two padding areas are both set in the first overhead and the first payload is divided into two sub-payloads with equal lengths is used in the following embodiments for description.

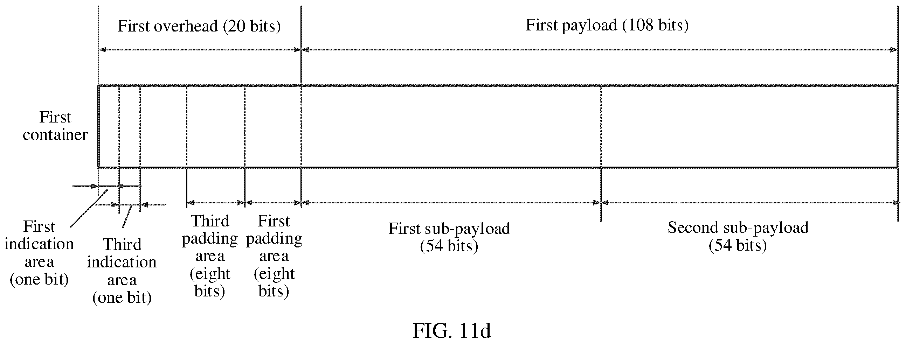

Based on the foregoing content, FIG. 11d is an example diagram of a structure of a first container according to this application. In FIG. 11d, a length of the first container is 128 bits, a length of a first overhead is 20 bits, a length of a first payload is 108 bits, both a length of a first sub-payload and a length of a second sub-payload are 54 bits, both a length of a first indication area and a length of a third indication area are one bit, and both a length of a first padding area and a length of a third padding area are eight bits.

Based on the foregoing content, FIG. 12e is an example diagram of a process of generating, based on a first service and a third service, a first container including third data, fourth data, first indication information, third indication information, a first padding area, and a third padding area, and encoding the first container to obtain a first block sequence carrying the first service and the third service according to this application.

In FIG. 12e, an example in which M is 2, a service 1 represents the first service, a service 3 represents the third service, a container 1 represents the first container, a block sequence 1 represents the first block sequence and is a block sequence in a 64B/66B encoding format, and the container 1 is the container shown in FIG. 11d is used for presentation.

As shown in FIG. 12e, the service 1 is a string of bit streams, and the service 3 is another string of bit streams. The first communication apparatus 100 may slice the service 1 by 54-bit segments to obtain a segment 1, and the segment 1 includes 54 bits. The first communication apparatus 100 may slice the service 3 by 54-bit segments to obtain a segment 3, and the segment 3 includes 54 bits.

Then, the first communication apparatus 100 places the segment 1 into a first sub-payload of the container 1, places the segment 3 into a second sub-payload of the container 1, respectively pads fixed patterns in a first padding area and a third padding area of the container 1, pads, in a first indication area of the container 1, indication information 1 indicating that no service data is padded in the first padding area, pads, in a third indication area of the container 1, indication information 3 indicating that no service data is padded in the third padding area, and pads, in a remaining area other than the first padding area, the third padding area, the first indication area, and the third indication area in an overhead of the container 1, overhead information corresponding to the container 1.

Then, the first communication apparatus 100 may truncate the container 1 by 64-bit segments, to obtain two segments, where each segment includes 64 bits.

Next, the first communication apparatus 100 places each segment of 64 bits into a payload area of a D block, to obtain two D blocks.

Later, the first communication apparatus 100 may respectively add an S block and a T block to two ends of the two D blocks, to obtain the block sequence 1.

In S1404, a process in which the second communication apparatus 200 obtains the first service and the third service based on the first block sequence carrying the first service and the third service is a reverse process of the process in which the first communication apparatus 100 generates, based on the first service and the third service, the block sequence carrying the first service and the third service in S1402. Details are not described in this application.

Specific implementation processes of the method embodiments shown in FIG. 14b and FIG. 14c are similar to the specific implementation process of the method embodiment shown in FIG. 14a. For details, refer to the related descriptions of the method embodiment shown in FIG. 14a. The details are not described herein.

It may be understood that when the first communication apparatus 100 sends a plurality of services to the second communication apparatus 200 by using one block sequence to carry the plurality of services, the plurality of services may have a rate adaptation requirement. For example, when a rate at which the first communication apparatus 100 sends each of the plurality of services is greater than, for a long period of time, a rate at which the first communication apparatus 100 receives the service, no data can be read from a cache for the service in the long run if rate adaptation is not performed. Therefore, when the first communication apparatus 100 sends the plurality of services to the second communication apparatus 200 by using one block sequence to carry the plurality of services, the rate adaptation may need to be performed on a service in the plurality of services that has a rate adaptation requirement.

Further, it may be understood that when the first communication apparatus 100 sends the plurality of services, all the plurality of services may have a rate adaptation requirement or none of the plurality of services has a rate adaptation requirement; or a part of the services may have a rate adaptation requirement, and the other part of the services do not have a rate adaptation requirement.

Using an example in which the plurality of services sent by the first communication apparatus 100 are the first service and the third service and both the first service and the third service have a rate adaptation requirement, the first communication apparatus 100 may send the first service and the third service to the second communication apparatus 200 by using the communication method shown in FIG. 14a.

It can be learned that, because two areas in the first block sequence that is generated by the first communication apparatus 100 based on the first service and the third service and that carries the first service and the third service do not carry services, to be specific, the first padding area does not carry the first service, and the third padding area does not carry the third service, both amounts of data of the first service and data of the third service that are carried in the first block sequence decrease, so that a rate at which the first communication apparatus 100 sends the first service to the second communication apparatus 200 is reduced, to achieve a rate adaptation effect on the first service, and a rate at which the first communication apparatus 100 sends the third service to the second communication apparatus 200 is reduced, to achieve a rate adaptation effect on the third service.

In addition, because the sum of the lengths of the first padding area and the third padding area is less than a length of one idle block, when the first communication apparatus 100 generates, based on the first service and the third service, the first block sequence carrying the first service and the third service, rate adaptation at a granularity less than the length of the idle block is equivalently performed on both the first service and the third service once. Compared with a case, shown in FIG. 9a, in which the first communication apparatus 100 needs to insert an idle block before an S block in a block sequence to implement service rate adaptation, this can reduce a delay and a jitter for service processing performed by the first communication apparatus 100.

It can be further learned that because the first block sequence that is sent by the first communication apparatus 100 to the second communication apparatus 200 and that carries the first service and the third service includes the first indication information, the third indication information, the first padding area, and the third padding area, the first indication information indicates that no service data is padded in the first padding area, and the third indication information indicates that no service data is padded in the third padding area, after receiving the first block sequence carrying the first service and the third service, the second communication apparatus 200 may obtain the first indication information and the third indication information, learn, based on the first indication information, that no service data is padded in the first padding area, and learn, based on the third indication information, that no service data is padded in the third padding area. Then, the second communication apparatus 200 may discard the fixed pattern padded in the first padding area and the fixed pattern padded in the third padding area, and then obtain the first service and the third service from a remaining area in the first block sequence.

Because the sum of the lengths of the first padding area and the third padding area is less than the length of one idle block, compared with a case, shown in FIG. 9b, in which the second communication apparatus 200 needs to first delete an idle block inserted before an S block in a block sequence to obtain a service, this can reduce a delay and a jitter for service processing performed by the second communication apparatus 200.

Using an example in which the plurality of services sent by the first communication apparatus 100 are the first service and the fourth service, the first service has a rate adaptation requirement, and the fourth service does not have a rate adaptation requirement, the first communication apparatus 100 may send the first service and the fourth service to the second communication apparatus 200 by using the communication method shown in FIG. 14b.

It can be learned that, because an area (namely, the first padding area) in the first block sequence that is generated by the first communication apparatus 100 based on the first service and the fourth service and that carries the first service and the fourth service does not carry the first service, an amount of data that is of the first service and that is carried in the first block sequence can decrease, so that a rate at which the first communication apparatus 100 sends the first service to the second communication apparatus 200 is reduced, to achieve a rate adaptation effect on the first service. The fourth padding area carries the fourth service. In this way, an amount of data that is of the first service and that is carried in the first block sequence can remain unchanged, and no rate adaption is performed on the fourth service. In addition, because the sum of the lengths of the first padding area and the fourth padding area is less than a length of one idle block, the length of the first padding area is definitely less than the length of one idle block. Therefore, when the first communication apparatus 100 generates, based on the first service and the fourth service, the first block sequence carrying the first service and the fourth service, rate adaptation at a granularity less than the length of the idle block is equivalently performed on the first service once. Compared with a case, shown in FIG. 9a, in which the first communication apparatus 100 needs to insert an idle block before an S block in a block sequence to implement service rate adaptation, this can reduce a delay and a jitter for service processing performed by the first communication apparatus 100.

It can be further learned that because the first block sequence that is sent by the first communication apparatus 100 to the second communication apparatus 200 and that carries the first service and the fourth service includes the first indication information, the fourth indication information, the first padding area, and the fourth padding area, the first indication information indicates that no service data is padded in the first padding area, and the fourth indication information indicates that the service data is padded in the fourth padding area, after receiving the first block sequence carrying the first service and the fourth service, the second communication apparatus 200 may obtain the first indication information and the fourth indication information, learn, based on the first indication information, that no service data is padded in the first padding area, and learn, based on the fourth indication information, that the service data is padded in the fourth padding area. Then, the second communication apparatus 200 may discard the fixed pattern padded in the first padding area, retain the service data padded in the fourth padding area, and obtain the first service and the fourth service from a remaining area and the retained fourth padding area in the first block sequence. Because the sum of the lengths of the first padding area and the fourth padding area is less than the length of one idle block, the length of the first padding area is definitely less than the length of one idle block. Compared with a case, shown in FIG. 9b, in which the second communication apparatus 200 needs to first delete an idle block inserted before an S block in a block sequence to obtain a service, this can reduce a delay and a jitter for service processing performed by the second communication apparatus 200.

Using an example in which the plurality of services sent by the first communication apparatus 100 are the second service and the fifth service, the second service has a rate adaptation requirement, and the fifth service does not have a rate adaptation requirement, the first communication apparatus 100 may send the second service and the fifth service to the second communication apparatus 200 by using the communication method shown in FIG. 14c.

It can be learned that in the second block sequence that is generated by the first communication apparatus 100 based on the second service and the fifth service and that carries the second service and the fifth service, the second padding area carries the second service, and the fifth padding area carries the fifth service. In this way, an amount of data that is of the second service and that is carried in the second block sequence can remain unchanged, and an amount of data that is of the fifth service and that is carried in the second block sequence can remain unchanged, in other words, the first communication apparatus 100 does not perform rate adaptation on the second service and the fifth service.

It can be further learned that because the second block sequence that is sent by the first communication apparatus 100 to the second communication apparatus 200 and that carries the second service and the fifth service includes the second indication information, the fifth indication information, the second padding area, and the fifth padding area, the second indication information indicates that the service data is padded in the second padding area, and the fifth indication information indicates that the service data is padded in the fifth padding area, after receiving the second block sequence carrying the second service and the fifth service, the second communication apparatus 200 may obtain the second indication information and the fifth indication information, learn, based on the second indication information, that the service data is padded in the second padding area, and learn, based on the fifth indication information, that the service data is padded in the fifth padding area. Then, the second communication apparatus 200 may retain a fixed pattern padded in the second padding area, retain the service data padded in the fifth padding area, and obtain the second service and the fifth service from a remaining area and the retained second padding area and fifth padding area in the second block sequence.

In the method embodiments shown in FIG. 14a to FIG. 14c, the first communication apparatus 100 determines, in a plurality of manners, whether the first service, the second service, the third service, the fourth service, and the fifth service have the rate adaptation requirement. For details, refer to related descriptions of the following manner 1, manner 2, and manner 3.

It can be learned that in the method embodiments shown in FIG. 14a to FIG. 14c, an example in which the first communication apparatus 100 generates, based on two services, a block sequence carrying the two services is used for description. An implementation in which the first communication apparatus 100 generates, based on three or more services, a block sequence carrying the three or more services may be deduced from the method embodiment shown in FIG. 10, the method embodiment shown in FIG. 13, and the method embodiments shown in FIG. 14a to FIG. 14c. Details are not described in this application.

In another possible embodiment, alternatively, before performing S1003/S1303, the first communication apparatus 100 may receive more services such as a third service, a fourth service, and a fifth service, and separately perform, on the more services such as the third service, the fourth service, and the fifth service, an operation similar to that performed on the first service/second service in S1002/S1302, to generate more block sequences such as a third block sequence carrying the third service, a fourth block sequence carrying the fourth service, and a fifth block sequence carrying the fifth service. Then, when S1003/S1303 is performed, the first block sequence/second block sequence and the more block sequences such as the third block sequence, the fourth block sequence, and the fifth block sequence are first multiplexed (which may also be referred to as "merged" or "spliced"), to obtain a multiplexed block sequence, and then the multiplexed block sequence is sent to the second communication apparatus 200.

Further, using the third service as an example, when determining that the third service has a rate adaptation requirement, the first communication apparatus 100 may perform an operation similar to that performed on the first service in S 1002, to generate a third block sequence carrying the third service. It may be understood that data in the third service is not padded in a padding area in the third block sequence herein, and indication information in the third block sequence indicates that no service data is padded in the padding area in the third block sequence. When determining that the third service has no rate adaptation requirement, the first communication apparatus 100 may perform an operation similar to that performed on the second service in S 1302, to generate a third block sequence carrying the third service. It may be understood that data in the third service is padded in a padding area in the third block sequence herein, and indication information in the third block sequence indicates that service data is padded in the padding area.

Using an example in which the first communication apparatus 100 generates, based on the first service, the first block sequence carrying the first service, and generates, based on the third service, the third block sequence carrying the third service, the first communication apparatus 100 may send the first block sequence and the third block sequence to the second communication apparatus 200 in the following manner: multiplexing the first block sequence and the third block sequence on a basis of N1 (N1 is a positive integer) block sequences in a preset sequence (for example, a sequence of the first block sequence first and then the third block sequence or a sequence of the third block sequence first and then the first block sequence), to obtain a multiplexed block sequence, and then sending the multiplexed block sequence to the second communication apparatus 200.

FIG. 15 is an example schematic flowchart of generating a multiplexed block sequence based on a first block sequence and a third block sequence according to this application. In FIG. 15, an example in which N1 is 2 and a preset sequence is a sequence of the first block sequence first and then the third block sequence is used to multiplex the first block sequence and the third block sequence, to obtain the multiplexed block sequence.

Correspondingly, after obtaining the multiplexed block sequence, the second communication apparatus 200 side may demultiplex the multiplexed block sequence in the unit of N1 block sequences to obtain the first block sequence and the third block sequence, then obtain the first service based on the first block sequence, and obtain the third service based on the third block sequence.

Further, the first communication apparatus 100 may send the multiplexed block sequence in the following manner:
An example in which both the first service and the third service are fine-granularity services, and the first communication apparatus 100 communicates with the second communication apparatus 200 by using the SPN fine-granularity technology is used. Assuming that the multiplexed block sequence belongs to a first FlexE sub-client, the first communication apparatus 100 may map, for transmission, the first FlexE sub-client to at least one sub-slot that is in an fgBU and that is allocated to the first FlexE sub-client. Correspondingly, the second communication apparatus 200 receives the multiplexed block sequence mapped to the at least one sub-slot that is in the fgBU and that is allocated to the first FlexE sub-client, and then obtains the first service and the third service based on the multiplexed block sequence. In this way, a plurality of services can be simultaneously transmitted in at least one sub-slot that is in the fgBU and that is allocated to one FlexE sub-client. Compared with a current case in which only one service can be transmitted in a sub-slot allocated to one FlexE sub-client, this can reduce a bandwidth waste and improve bandwidth utilization when a bandwidth (for example, 2.048 Mbps) of a service is far less than a sum (for example, 10 Mbps) of bandwidths of sub-slots allocated to the FlexE sub-client.

The following describes in detail a manner in which the first communication apparatus 100 determines whether a service (for example, the first service, the second service, or the third service) has a rate adaptation requirement in the foregoing embodiments (for example, the method embodiment shown in FIG. 10, the method embodiment shown in FIG. 13, and the method embodiments shown in FIG. 14a to FIG. 14c).

Using the first service as an example, the first communication apparatus 100 may determine, with reference to any one or a combination of the following manner 1, manner 2, and manner 3, whether the first service has the rate adaptation requirement:
Manner 1: A rate at which the first communication apparatus 100 receives the first service is periodically obtained, and it is determined whether the rate at which the first communication apparatus 100 receives the first service is less than a rate threshold. When it is determined that the rate at which the first communication apparatus 100 receives the first service is less than the rate threshold, it is determined that the first service has the rate adaptation requirement. When it is determined that the rate at which the first communication apparatus 100 receives the first service is greater than or equal to the rate threshold, it is determined that the first service does not have the rate adaptation requirement.
   The rate threshold may be customized based on an actual case. For example, assuming that the rate at which the first communication apparatus 100 receives the first service fluctuates around 2.048 Mbps, the rate threshold may be set to 2.048 Mbps. Assuming that the rate at which the first communication apparatus 100 receives the first service fluctuates around 155 Mbps, the rate threshold may be set to 155 Mbps.
Manner 2: A depth of the first service in a cache queue that is in the first communication apparatus 100 and that is for caching the first service is periodically obtained. When the depth of the first service in the cache queue is less than a depth threshold, it is determined that the first service has the rate adaptation requirement. When the depth of the first service in the cache queue is greater than or equal to a depth threshold, it is determined that the first service does not have the rate adaptation requirement.
   The depth threshold may be customized based on an actual case. For example, when a total depth of the cache queue is 100 bits, the depth threshold may be set to 60 bits.
Manner 3: A depth of the first service in a cache queue that is in the first communication apparatus 100 and that is for caching the first service is periodically obtained. When it is determined that a ratio of the depth of the first service in the cache queue to a total depth of the cache queue is less than a depth ratio threshold, it is determined that the first service has the rate adaptation requirement. When it is determined that a ratio of the depth of the first service in the cache queue to a total depth of the cache queue is greater than or equal to a depth ratio threshold, it is determined that the first service does not have the rate adaptation requirement.

The depth ratio threshold may be customized based on an actual case. For example, when the total depth of the cache queue is 100 bits, the depth ratio threshold may be set to 0.6.

It should be understood that the manner 1, the manner 2, and the manner 3 are merely examples, and should not be considered as specific limitations on a manner in which the first communication apparatus 100 determines, for a service, whether the service has a rate adaptation requirement.

In all the foregoing embodiments (for example, the method embodiment shown in FIG. 10, the method embodiment shown in FIG. 13, and the method embodiments shown in FIG. 14a to FIG. 14c), an example in which a padding area (for example, the padding area of the container 1 shown in FIG. 12a and the padding area of the container 2 shown in FIG. 12c-1 and FIG. 12c-2) is completely set in a container overhead is used for description. It can be learned from the foregoing that the padding area may alternatively be completely set in a container payload; or a part of the padding area is set in a container overhead, and the other part is set in a container payload. This is not specifically limited in this application. It may be understood that, compared with the example in which the padding area is completely set in the container payload, the example in which a part of the padding area is set in the container overhead and the other part is set in the container payload can increase a quantity of bits from a service that are carried in the container payload, to increase a quantity of bits from the service that are carried in a block sequence, and improve service transmission efficiency. It may be further understood that, compared with the example in which a part of the padding area is set in the container overhead and the other part is set in the container payload, the example in which the padding area is completely set in the container payload can further increase the quantity of bits from the service that are carried in the container payload, to further increase the quantity of bits from the service that are carried in the block sequence. Therefore, during actual application, an appropriate container structure may be flexibly selected in the foregoing two possible implementations based on a specific status of a service to be transmitted, to carry the service.

In all the foregoing embodiments (for example, the method embodiment shown in FIG. 10, the method embodiment shown in FIG. 13, and the method embodiments shown in FIG. 14a to FIG. 14c), an example in which bits in a container (for example, the container 1 shown in FIG. 12a and the container 2 shown in FIG. 12c-1 and FIG. 12c-2) are carried in a payload area of a D block in a block sequence (for example, the block sequence 1 shown in FIG. 12a and the block sequence 2 shown in FIG. 12c-1 and FIG. 12c-2) is used for description. In a specific implementation, to increase a quantity of bits from a service that are carried in a block sequence, bits in a container may be not only carried in a payload area of a D block in the block sequence but also carried in a payload area of an S block, a payload area of a T block, and/or the like. In other words, a length W of the container may alternatively be equal to a sum of a length of the payload area of the D block in the block sequence and a length of a part of the payload area or the entire payload area of the S block and/or a length of a part of the payload area or the entire payload area of the T block, and a length Y of a container payload may be larger. In this way, the container can carry more bits from the service, so that the block sequence generated based on the container can carry more bits from the service, to improve service transmission efficiency. Therefore, during actual application, an appropriate block combination may be flexibly selected in the foregoing several possible implementations based on a specific status of a service to be transmitted, to carry the container.

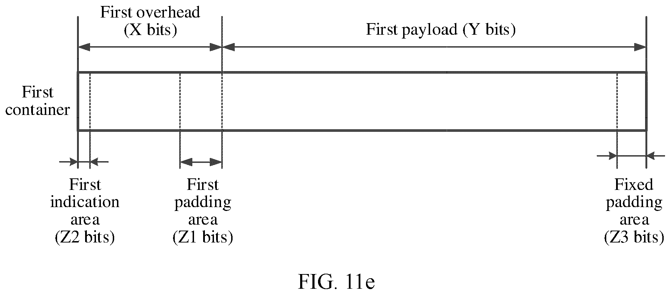

In the foregoing embodiments (for example, the method embodiment shown in FIG. 10, the method embodiment shown in FIG. 13, and the method embodiments shown in FIG. 14a to FIG. 14c), an example in which a container (for example, the container 1 shown in FIG. 12a and the container 2 shown in FIG. 12c-1 and FIG. 12c-2) includes only a container overhead and a container payload, and the container overhead includes a padding area and an indication area is used for presentation. In a possible embodiment, a fixed padding area with a length of Z3 (Z3 is a positive integer) bits may be further set in the container overhead or the container payload. The fixed padding area is padded with a fixed pattern and does not carry service data. The fixed padding area is for making a length W of the container equal to a total quantity of bits carrying the container in a block sequence, so that when the first communication apparatus 100 encodes the container to generate the block sequence, the generated block sequence can meet a format including the first S block, the M first D blocks, and the first T block, to be specific, meet a block type of a fixed 64B/66B encoding format. Optionally, the fixed padding area may be set in the container overhead, or may be carried in a first container payload. An example in which the fixed padding area is set in the container overhead is used, as shown in FIG. 11e.

In the foregoing embodiments (for example, the method embodiment shown in FIG. 10, the method embodiment shown in FIG. 13, and the method embodiments shown in FIG. 14a to FIG. 14c), an example in which indication information (for example, the indication information 1 shown in FIG. 12a and the indication information 2 shown in FIG. 12c-1 and FIG. 12c-2) indicates only whether service data is padded in a padding area in a container and a length of an indication area (for example, the indication area 1 shown in FIG. 12a and the indication area 2 shown in FIG. 12c-1 and FIG. 12c-2) is one bit is used for presentation. In a possible embodiment, in addition to indicating that no service data is padded in the padding area in the container, the indication information may further indicate a specific service whose data is not padded in the padding area in the container. The length of the indication area may alternatively be greater than one bit. In this way, when receiving the service, the second communication apparatus 200 can learn of the specific service that is received.

For example, the indication information 1 in the container 1 shown in FIG. 12a not only indicates that no service data is padded in the padding area in the container 1, but also may indicate that data in the service 1 is not padded in the padding area in the container 1. The indication information 2 not only indicates that the service data is padded in the padding area in the container 2, but also may indicate that data in the service 1 is padded in the padding area in the container 2. In this case, the length of the indication area may be one bit, or may be greater than one bit. When the length of the indication area is greater than one bit, the indication area may be consecutive bits in the container overhead, or may be separate bits. This is not specifically limited in this application.

In the foregoing embodiments (for example, the method embodiment shown in FIG. 10, the method embodiment shown in FIG. 13, and the method embodiments shown in FIG. 14a to FIG. 14c), an example in which a fixed pattern is padded when no service data is padded in a padding area (for example, the padding area of the container 1 shown in FIG. 12a) is used for description. In a specific implementation, if other data instead of the fixed pattern is padded when no service data is padded in the padding area, after learning, based on indication information (for example, the indication information shown in FIG. 12a), that no service data is padded in the padding area, the second communication apparatus 200 may read content in the padding area, and obtain a service from a remaining area in a block sequence. It may be understood that, padding the other data instead of the fixed pattern when no service data is padded in the padding area can also achieve a rate adaptation effect on the service.

The communication method provided in this application may be further combined with an existing method for implementing service rate adaptation by inserting an idle block before an S block in a block sequence. If the first communication apparatus 100 finds, after generating a block sequence, for example, the first block sequence/second block sequence, and before sending the block sequence, for example, the first block sequence/second block sequence, to the second communication apparatus 200, that there is still a rate adaptation requirement for the block sequence, for example, the first block sequence/second block sequence, the first communication apparatus 100 may insert an idle block before an S block in the block sequence, for example, the first block sequence/second block sequence, to implement further rate adaptation. It may be understood that, in the communication method provided in this application, because the fine-granularity rate adaptation has been performed once before the first communication apparatus 100 generates the block sequence, for example, the first block sequence/second block sequence, even if the idle block still needs to be subsequently inserted before the S block in the block sequence, for example, the first block sequence/second block sequence, to perform rate adaptation, compared with a current case in which the rate adaptation is performed only by inserting the idle block, this can still decrease a quantity of idle blocks that need to be inserted, and reduce the delays and jitters for the service processing performed by the first communication apparatus 100 and the second communication apparatus 200.

It may be understood that, to implement functions in the foregoing embodiments, a communication apparatus includes corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on particular application scenarios and design constraints of the technical solutions.

FIG. 16, FIG. 17, and FIG. 18 each are a diagram of a structure of a possible communication apparatus according to this application. These communication apparatuses can be configured to implement functions of the first communication apparatus 100 in the method embodiment shown in FIG. 10, the method embodiment shown in FIG. 13, and the method embodiments shown in FIG. 14a to FIG. 14c, and therefore can achieve the beneficial effects of the method embodiment shown in FIG. 10, the method embodiment shown in FIG. 13, and the method embodiments shown in FIG. 14a to FIG. 14c. These communication apparatuses can alternatively be configured to implement functions of the second communication apparatus 200 in the method embodiment shown in FIG. 10, the method embodiment shown in FIG. 13, and the method embodiments shown in FIG. 14a to FIG. 14c, and therefore can achieve the beneficial effects of the method embodiment shown in FIG. 10, the method embodiment shown in FIG. 13, and the method embodiments shown in FIG. 14a to FIG. 14c.

In this embodiment of this application, the communication apparatus may be the first communication apparatus 100 in FIG. 8. In this embodiment of this application, the communication apparatus may alternatively be the second communication apparatus 200 in FIG. 8. As shown in FIG. 16, the communication apparatus 1600 includes a processing unit 1610 and a transceiver unit 1620. The communication apparatus 1600 is configured to implement functions of the first communication apparatus 100 in embodiments such as the method embodiment shown in FIG. 16, the method embodiment shown in FIG. 13, and the method embodiments shown in FIG. 14a to FIG. 14c.

When the communication apparatus 1600 is configured to implement the functions of the first communication apparatus 100 in the method embodiment shown in FIG. 10:
The transceiver unit 1620 is configured to receive a first service. The processing unit 1610 is configured to generate, based on the first service, a first block sequence carrying the first service. The transceiver unit 1620 is further configured to send the first block sequence to a second communication apparatus 200. The first block sequence includes a first S block, M first D blocks, and a first T block. The first block sequence includes first indication information and a first padding area, the first indication information indicates that no service data is padded in the first padding area, the first service is not padded in the first padding area, and a length of the first padding area is less than a length of the first D block, where M is a positive integer.

In a possible implementation, the processing unit 1610 is specifically configured to: when it is determined that the first service has a rate adaptation requirement, generate, based on the first service, the first block sequence carrying the first service.

In a possible implementation, the processing unit 1610 may specifically generate, in the following manner based on the first service, the first block sequence carrying the first service: first obtaining a first container, where the first container includes first data extracted from the first service, the first indication information, and the first padding area; and then encoding the first container, to obtain the first block sequence. In a possible implementation, the first container includes a container overhead and a container payload, the container payload includes the first padding area and the first data, and the container overhead includes the first indication information.

In a possible implementation, the first container includes a container overhead and a container payload, the container overhead includes the first indication information and the first padding area, and the container payload includes the first data.

In a possible implementation, the first container further includes a fixed padding area, a fixed pattern is padded in the fixed padding area, and the fixed padding area does not carry service data.

In a possible implementation, the M first data blocks carry the first container, and the first start block and the first termination block do not carry the first container.

In a possible implementation, the M first data blocks and the first termination block carry the first container, and the first start block does not carry the first container.

In a possible implementation, the transceiver unit 1620 may specifically communicate with the second communication apparatus 200 by using a fine-granularity technology, to send the first block sequence to the second communication apparatus 200.

When the transceiver unit 1620 communicates with the second communication apparatus 200 by using the fine-granularity technology:
In a possible implementation, the fine-granularity technology is an SPN fine-granularity technology. In this case, the transceiver unit 1620 may specifically send the first block sequence to the second communication apparatus 200 in the following manner: Assuming that the first block sequence belongs to a first FlexE sub-client, the transceiver unit 1620 maps the first FlexE sub-client to at least one sub-slot that is in an fgBU and that is allocated to the first FlexE sub-client.

In a possible implementation, the fine-granularity technology is an MTN fine-granularity technology. In this case, the transceiver unit 1620 may specifically send the first block sequence to the second communication apparatus 200 in the following manner: Assuming that the first block sequence belongs to a first MTN fg-path, the transceiver unit 1620 maps the first MTN fg-path to at least one sub-slot that is in an MTN fgBU and that is allocated to the first MTN fg-path.

In another possible implementation, the transceiver unit 1620 communicates with the second communication apparatus 200 through FlexE. In this case, the transceiver unit 1620 may specifically send the first block sequence to the second communication apparatus 200 in the following manner: Assuming that the first block sequence belongs to a first FlexE client, the transceiver unit 1620 maps the first FlexE client to at least one slot that is in a FlexE group and that is allocated to the first FlexE sub-client.

In still another possible implementation, the transceiver unit 1620 communicates with the second communication apparatus 200 through an MTN. In this case, the transceiver unit 1620 may specifically send the first block sequence to the second communication apparatus 200 in the following manner: Assuming that the first block sequence belongs to a first MTNP, the transceiver unit 1620 maps the first MTNP to at least one slot that is at an MTNS and that is allocated to the first MTNP.

When the communication apparatus 1600 is configured to implement the functions of the first communication apparatus 100 in the method embodiment shown in FIG. 13: The transceiver unit 1620 is configured to receive a second service. The processing unit 1610 is configured to generate, based on the second service, a second block sequence carrying the second service. The transceiver unit 1620 is further configured to send the second block sequence to a second communication apparatus 200. The second block sequence includes a second S block, M second D blocks, and a second T block. The second block sequence includes second indication information and a second padding area, the second indication information indicates that service data is padded in the second padding area, the second service is padded in the second padding area, and a length of the second padding area is less than a length of the second D block.

In a possible implementation, the processing unit 1610 is specifically configured to: when it is determined that the second service has no rate adaptation requirement, generate, based on the second service, the first block sequence carrying the second service.

When the communication apparatus 1600 is configured to implement the functions of the first communication apparatus 100 in the method embodiment shown in FIG. 14a: The transceiver unit 1620 is configured to receive a first service and a third service. The processing unit 1610 is configured to generate, based on the first service and the third service, a first block sequence carrying the first service and the third service. The transceiver unit 1620 is further configured to send, to a second communication apparatus 200, the first block sequence carrying the first service and the third service. The first block sequence includes not only first indication information and a first padding area but also third indication information and a third padding area, the third indication information indicates that no service data is padded in the third padding area, data in the third service is not padded in the third padding area, and a sum of lengths of the first padding area and the third padding area is less than a length of a first D block.

In a possible implementation, the processing unit 1610 is specifically configured to: when it is determined that both the first service and the third service have a rate adaptation requirement, generate, based on the first service and the third service, the first block sequence carrying the first service and the third service.

When the communication apparatus 1600 is configured to implement the functions of the first communication apparatus 100 in the method embodiment shown in FIG. 14b: The transceiver unit 1620 is configured to receive a first service and a fourth service. The processing unit 1610 is configured to generate, based on the first service and the fourth service, a first block sequence carrying the first service and the fourth service. The transceiver unit 1620 is further configured to send, to a second communication apparatus 200, the first block sequence carrying the first service and the fourth service. The first block sequence includes not only first indication information and a first padding area but also fourth indication information and a fourth padding area, the fourth indication information indicates that service data is padded in the fourth padding area, data in the fourth service is padded in the fourth padding area, and a sum of lengths of the first padding area and the fourth padding area is less than a length of a first D block.

In a possible implementation, the processing unit 1610 is specifically configured to: when it is determined that the first service has a rate adaptation requirement and the fourth service does not have a rate adaptation requirement, generate, based on the first service and the fourth service, the first block sequence carrying the first service and the fourth service.

When the communication apparatus 1600 is configured to implement the functions of the first communication apparatus 100 in the method embodiment shown in FIG. 14c: The transceiver unit 1620 is configured to receive a second service and a fifth service. The processing unit 1610 is configured to generate, based on the second service and the fifth service, a second block sequence carrying the second service and the fifth service. The transceiver unit 1620 is further configured to send, to a second communication apparatus 200, the second block sequence carrying the second service and the fifth service. The second block sequence includes not only second indication information and a second padding area but also fifth indication information and a fifth padding area, the fifth indication information indicates that service data is padded in the fifth padding area, data in the fifth service is padded in the fifth padding area, and a sum of lengths of the second padding area and the fifth padding area is less than a length of a second D block.

In a possible implementation, the processing unit 1610 is specifically configured to: when it is determined that neither the second service nor the fifth service has a rate adaptation requirement, generate, based on the second service and the fifth service, the second block sequence carrying the second service and the fifth service.

In a possible implementation, using the first service as an example, the processing unit 1610 may specifically determine, in any one or a combination of the following manner 1, manner 2, and manner 3, whether services such as the first service, the second service, the third service, the fourth service, and the fifth service have the rate adaptation requirement:
Manner 1: A rate at which the transceiver unit 1620 receives the first service is periodically obtained, and it is determined whether the rate at which the transceiver unit 1620 receives the first service is less than a rate threshold. When it is determined that the rate at which the transceiver unit 1620 receives the first service is less than the rate threshold, it is determined that the first service has the rate adaptation requirement. When it is determined that the rate at which the transceiver unit 1620 receives the first service is greater than or equal to the rate threshold, it is determined that the first service does not have the rate adaptation requirement.
Manner 2: A depth of the first service in a cache queue that is in the transceiver unit 1620 and that is for caching the first service is periodically obtained. When the depth of the first service in the cache queue is less than a depth threshold, it is determined that the first service has the rate adaptation requirement. When the depth of the first service in the cache queue is greater than or equal to a depth threshold, it is determined that the first service does not have the rate adaptation requirement.
Manner 3: A depth of the first service in a cache queue that is in the transceiver unit 1620 and that is for caching the first service is periodically obtained. When a ratio of the depth of the first service in the cache queue to a total depth of the cache queue is less than a depth ratio threshold, it is determined that the first service has the rate adaptation requirement. When a ratio of the depth of the first service in the cache queue to a total depth of the cache queue is greater than or equal to a depth ratio threshold, it is determined that the first service does not have the rate adaptation requirement.

It should be understood that the manner 1, the manner 2, and the manner 3 are merely examples, and should not be considered as specific limitations on a manner in which the processing unit 1610 determines, for a service, whether the service has a rate adaptation requirement.

The communication apparatus 1600 shown in FIG. 16 may alternatively be configured to implement the functions of the second communication apparatus 200 in embodiments such as the method embodiment shown in FIG. 10, the method embodiment shown in FIG. 13, and the method embodiments shown in FIG. 14a to FIG. 14c.

When the communication apparatus 1600 is configured to implement the functions of the second communication apparatus 200 in the method embodiment shown in FIG. 10, the transceiver unit 1620 is configured to receive a first block sequence that is sent by a first communication apparatus 100 and that carries a first service. The processing unit 1610 is configured to obtain the first service based on the first block sequence. The first block sequence includes a first S block, M first D blocks, and a first T block. The first block sequence includes first indication information and a first padding area, the first indication information indicates that no service data is padded in the first padding area, the first service is not padded in the first padding area, and a length of the first padding area is less than a length of the first D block, where M is a positive integer.

In a possible implementation, the processing unit 1610 may specifically obtain the first service in the following manner based on the first block sequence: first decoding the first block sequence to obtain a first container, where the first container includes first data extracted from the first service, the first indication information, and the first padding area; and then obtaining the first service from the first container.

In a possible implementation, the transceiver unit 1620 may specifically communicate with the first communication apparatus 100 by using a fine-granularity technology, and receive the first block sequence sent by the first communication apparatus 100.

When the transceiver unit 1620 communicates with the first communication apparatus 100 by using the fine-granularity technology:
In a possible implementation, the fine-granularity technology is an SPN fine-granularity technology. In this case, the transceiver unit 1620 may specifically receive the first block sequence in the following manner: Assuming that the first block sequence belongs to a first FlexE sub-client, the second communication apparatus 200 may obtain the first block sequence from at least one sub-slot that is in an fgBU and that is allocated to the first FlexE sub-client.

In a possible implementation, the fine-granularity technology is an MTN fine-granularity technology. In this case, the transceiver unit 1620 may specifically receive the first block sequence in the following manner: Assuming that the first block sequence belongs to a first MTN fg-path, the transceiver unit 1620 may obtain the first block sequence from at least one sub-slot that is in an MTN fgBU and that is allocated to the first MTN fg-path.

In another possible implementation, the transceiver unit 1620 communicates with the first communication apparatus 100 through FlexE. In this case, the transceiver unit 1620 may specifically receive, in the following manner, the first block sequence sent by the first communication apparatus 100: Assuming that the first block sequence belongs to a first FlexE client, the transceiver unit 1620 may obtain the first block sequence from at least one slot that is in a FlexE group and that is allocated to the first FlexE sub-client.

In still another possible implementation, the transceiver unit 1620 communicates with the first communication apparatus 100 through an MTN. In this case, the transceiver unit 1620 may specifically receive, in the following manner, the first block sequence sent by the first communication apparatus 100: Assuming that the first block sequence belongs to a first MTNP, the transceiver unit 1620 may obtain the first block sequence from at least one slot that is at an MTNS and that is allocated to the first MTNP.

When the communication apparatus 1600 is configured to implement the functions of the second communication apparatus 200 in the method embodiment shown in FIG. 13: The transceiver unit 1620 is configured to receive a second block sequence carrying a second service, where the second block sequence includes a second S block, M second D blocks, and a second T block, the second block sequence includes second indication information and a second padding area, the second indication information indicates that service data is padded in the second padding area, the second service is padded in the second padding area, and a length of the second padding area is less than a length of the second D block. The processing unit 1610 is configured to obtain the second service based on the second block sequence.

When the communication apparatus 1600 is configured to implement the functions of the second communication apparatus 200 in the method embodiment shown in FIG. 14a: The transceiver unit 1620 is configured to receive a first block sequence carrying a first service and a third service. The first block sequence includes not only first indication information and a first padding area but also third indication information and a third padding area, the third indication information indicates that no service data is padded in the third padding area, data in the third service is not padded in the third padding area, and a sum of lengths of the first padding area and the third padding area is less than a length of a first D block. The processing unit 1610 is configured to obtaining the first service and the third service based on the first block sequence carrying the first service and the third service.

When the communication apparatus 1600 is configured to implement the functions of the second communication apparatus 200 in the method embodiment shown in FIG. 14b: The transceiver unit 1620 is configured to receive a first block sequence carrying a first service and a fourth service. The first block sequence includes not only first indication information and a first padding area but also fourth indication information and a fourth padding area, the fourth indication information indicates that service data is padded in the fourth padding area, data in the fourth service is padded in the fourth padding area, and a sum of lengths of the first padding area and the fourth padding area is less than a length of a first D block. The processing unit 1610 is configured to obtain the first service and the fourth service based on the first block sequence carrying the first service and the fourth service.

When the communication apparatus 1600 is configured to implement the functions of the second communication apparatus 200 in the method embodiment shown in FIG. 14c: The transceiver unit 1620 is configured to receive a second block sequence carrying a second service and a fifth service. The second block sequence includes not only second indication information and a second padding area but also fifth indication information and a fifth padding area, the fifth indication information indicates that service data is padded in the fifth padding area, data in the fifth service is padded in the fifth padding area, and a sum of lengths of the second padding area and the fifth padding area is less than a length of a second D block. The processing unit 1610 is configured to obtain the second service and the fifth service based on the second block sequence carrying the second service and the fifth service.

For related content in the foregoing solutions and more detailed descriptions of the processing unit 1610 and the transceiver unit 1620, directly refer to the related descriptions in embodiments such as the method embodiment shown in FIG. 10, the method embodiment shown in FIG. 13, and the method embodiments shown in FIG. 14a to FIG. 14c. Details are not described herein again.

As shown in FIG. 17, the communication apparatus 1700 includes a processing circuit 1710 and an interface circuit 1720. The processing circuit 1710 and the interface circuit 1720 are coupled to each other. It may be understood that the interface circuit 1720 may be a transceiver or an input/output port. Optionally, the communication apparatus 1700 may further include a memory, configured to store instructions executed by the processing circuit, store input data needed by the processing circuit 1710 to run instructions, or store data generated after the processing circuit 1710 runs instructions.

When the communication apparatus 1700 is configured to implement the functions of the first communication apparatus 100 in embodiments such as the method embodiment shown in FIG. 10, the method embodiment shown in FIG. 13, and the method embodiments shown in FIG. 14a to FIG. 14c, the processing circuit 1710 is configured to implement a function that is of the processing unit 1610 and that corresponds to the first communication apparatus 100, and the interface circuit 1720 is configured to implement a function that is of the transceiver unit 1620 and that corresponds to the first communication apparatus 100.

When the communication apparatus 1700 is configured to implement the functions of the second communication apparatus 200 in embodiments such as the method embodiment shown in FIG. 10, the method embodiment shown in FIG. 13, and the method embodiments shown in FIG. 14a to FIG. 14c, the processing circuit 1710 is configured to implement a function that is of the processing unit 1610 and that corresponds to the second communication apparatus 200, and the interface circuit 1720 is configured to implement a function that is of the transceiver unit 1620 and that corresponds to the second communication apparatus 200.

As shown in FIG. 18, the communication apparatus 1800 includes a processor 1810 and a communication interface 1820. The processor 1810 and the communication interface 1820 are coupled to each other. It may be understood that the communication interface 1820 may be a transceiver or an input/output port. Optionally, the communication apparatus 1800 may further include a memory 1830, configured to store instructions executed by the processor 1810, store input data needed by the processor 1810 to run instructions, or store data generated after the processor 1810 runs instructions.

When the communication apparatus 1800 is configured to implement the functions of the first communication apparatus 100 in embodiments such as the method embodiment shown in FIG. 10, the method embodiment shown in FIG. 13, and the method embodiments shown in FIG. 14a to FIG. 14c, the processor 1810 is configured to implement a function that is of the processing unit 1610 and that corresponds to the first communication apparatus 100, and the communication interface 1820 is configured to implement a function that is of the transceiver unit 1620 and that corresponds to the first communication apparatus 100.

When the communication apparatus 1800 is configured to implement the functions of the second communication apparatus 200 in embodiments such as the method embodiment shown in FIG. 10, the method embodiment shown in FIG. 13, and the method embodiments shown in FIG. 14a to FIG. 14c, the processor 1810 is configured to implement a function that is of the processing unit 1610 and that corresponds to the second communication apparatus 200, and the communication interface 1820 is configured to implement a function that is of the transceiver unit 1620 and that corresponds to the second communication apparatus 200.

When the communication apparatus (for example, the communication apparatus 1600, the communication apparatus 1700, or the communication apparatus 1800) is a chip used in a communication apparatus, the chip of the communication apparatus implements the functions of the communication apparatus in the foregoing method embodiments. The chip of the communication apparatus receives information from another module (for example, a radio frequency module or an antenna) in the communication apparatus, where the information is sent by another communication apparatus to the chip of the communication apparatus. Alternatively, the chip of the communication apparatus sends information to another module (for example, a radio frequency module or an antenna) in the communication apparatus, where the information is sent by the communication apparatus to a chip of another communication apparatus.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

According to the method provided in this application, this application further provides a computer program product. The computer program product includes a computer program or instructions. When the computer program or the instructions are run on a computer, the computer is enabled to perform the method in any one of embodiments such as the method embodiment shown in FIG. 10, the method embodiment shown in FIG. 13, and the method embodiments shown in FIG. 14a to FIG. 14c.

According to the method provided in this application, this application further provides a computer-readable storage medium. The computer-readable medium stores a program or instructions. When the program or the instructions are run on a computer, the computer is enabled to perform the method in any one of embodiments such as the method embodiment shown in FIG. 10, the method embodiment shown in FIG. 13, and the method embodiments shown in FIG. 14a to FIG. 14c.

According to the method provided in this application, this application further provides a chip system. The chip system may include a processor. The processor is coupled to a memory, and may be configured to perform the method in any one of embodiments such as the method embodiment shown in FIG. 10, the method embodiment shown in FIG. 13, and the method embodiments shown in FIG. 14a to FIG. 14c. Optionally, the chip system further includes the memory. The memory is configured to store a computer program (which may also be referred to as code or instructions). The processor is configured to invoke the computer program from the memory and run the computer program, to enable an apparatus in which the chip system is installed to perform the method in any one of embodiments such as the method embodiment shown in FIG. 10, the method embodiment shown in FIG. 13, and the method embodiments shown in FIG. 14a to FIG. 14c.

According to the communication method provided in this application, this application further provides a communication system. The communication system includes the first communication apparatus 100 and the second communication apparatus 200 above.

The method steps in embodiments of this application may be implemented by hardware, or may be implemented by executing software instructions by a processor. The software instructions may include a corresponding software module. The software module may be stored in a random access memory (random access memory, RAM), a flash memory (flash), a read-only memory (read-only memory, ROM), a programmable read-only memory, an erasable programmable read-only memory (erasable programmable ROM, EPROM), an electrically erasable programmable read-only memory, a register, a hard disk, a solid-state drive (solid-state drive, SSD), a removable hard disk, a compact disc read-only memory (compact disc read-only memory, CD-ROM), or any other form of storage medium well-known in the art. For example, a storage medium is coupled to the processor, so that the processor can read information from the storage medium and write information into the storage medium. Certainly, the storage medium may alternatively be a component of the processor. The processor and the storage medium may be located in an application-specific integrated circuit (application-specific integrated circuit, ASIC). In addition, the ASIC may be located in a communication apparatus. Certainly, the processor and the storage medium may alternatively exist in the communication apparatus as discrete components.

All or a part of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a special-purpose computer, a computer network, a network device, user equipment, or another programmable apparatus. The computer program or the instructions may be stored in a computer-readable storage medium, or may be sent from a computer-readable storage medium to another computer-readable storage medium. For example, the computer program or the instructions may be sent from a website, computer, server, or data center to another website, computer, server, or data center in a wired or wireless manner. The computer-readable storage medium may be any usable medium accessible to the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

"A plurality of" in this application refers to two or more than two. "And/or" describes an association relationship between associated objects, and represents that three relationships may exist. For example, A and/or B may represent the following cases: A exists alone, both A and B exist, and B exists alone, where A and B may be singular or plural. In text descriptions of this application, the character "/" usually indicates an "or" relationship between associated objects. In a formula in this application, the character "/" indicates a "division" relationship between associated objects. "Including at least one of A, B, or C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving, by a first communication apparatus, a first constant bit rate CBR service;
generating, by the first communication apparatus based on the first CBR service, a first block sequence carrying the first CBR service, wherein the first block sequence consists of a first start block, M first data blocks, and a first termination block, the first block sequence comprises first indication information and a first padding area, the first indication information indicates that no service data is padded in the first padding area, the first CBR service is not padded in the first padding area, and a length of the first padding area is less than a length of the first data block, wherein M is a positive integer; and
sending, by the first communication apparatus, the first block sequence to a second communication apparatus.

2. The method according to claim 1, wherein the method further comprises:
receiving, by the first communication apparatus, a second CBR service;
generating, by the first communication apparatus based on the second CBR service, a second block sequence carrying the second CBR service, wherein the second block sequence consists of a second start block, M second data blocks, and a second termination block, the second block sequence comprises second indication information and a second padding area, the second indication information indicates that service data is padded in the second padding area, the second CBR service is padded in the second padding area, and a length of the second padding area is less than a length of the second data block; and
sending, by the first communication apparatus, the second block sequence to the second communication apparatus.

3. The method according to claim 1 or 2, wherein the generating, by the first communication apparatus based on the first CBR service, a first block sequence carrying the first CBR service comprises:
obtaining, by the first communication apparatus, a first container, wherein the first container comprises first data extracted from the first CBR service, the first indication information, and the first padding area; and
encoding, by the first communication apparatus, the first container to obtain the first block sequence.

4. The method according to claim 3, wherein the first container comprises a container overhead and a container payload, the container payload comprises the first padding area and the first data, and the container overhead comprises the first indication information.

5. The method according to claim 3, wherein the first container comprises a container overhead and a container payload, the container overhead comprises the first indication information and the first padding area, and the container payload comprises the first data.

6. The method according to claim 4 or 5, wherein the first container further comprises a fixed padding area, a fixed pattern is padded in the fixed padding area, and the fixed padding area does not carry service data.

7. The method according to any one of claims 3 to 6, wherein the M first data blocks carry the first container, and the first start block and the first termination block do not carry the first container.

8. The method according to any one of claims 3 to 6, wherein the M first data blocks and the first termination block carry the first container, and the first start block does not carry the first container.

9. The method according to any one of claims 1 to 8, wherein the first communication apparatus communicates with the second communication apparatus by using a fine-granularity technology.

10. The method according to claim 9, wherein the sending, by the first communication apparatus, the first block sequence to a second communication apparatus comprises:
the first block sequence belongs to a first flexible Ethernet FlexE sub-client sub-client, mapping, by the first communication apparatus, the first FlexE sub-client to at least one sub-slot that is in a fine-granularity basic unit fgBU and that is allocated to the first FlexE sub-client.

11. The method according to claim 9, wherein the sending, by the first communication apparatus, the first block sequence to a second communication apparatus comprises:
the first block sequence belongs to a first metro transport network fine-granularity path MTN fg-path, mapping the first MTN fg-path to at least one sub-slot that is in an MTN fgBU and that is allocated to the first MTN fg-path.

12. The method according to any one of claims 1 to 11, wherein before the generating, by the first communication apparatus based on the first CBR service, a first block sequence carrying the first CBR service, the method further comprises:
receiving, by the first communication apparatus, a third CBR service; and
the generating, by the first communication apparatus based on the first CBR service, a first block sequence carrying the first CBR service comprises:
generating, by the first communication apparatus based on the first CBR service and the third CBR service, the first block sequence carrying the first CBR service and the third CBR service, wherein the first block sequence further comprises third indication information and a third padding area, the third indication information indicates that no service data is carried in the third padding area, the service data is not padded in the third padding area, and a sum of lengths of the third padding area and the first padding area is less than the length of the first data block.

13. The method according to any one of claims 1 to 11, wherein before the generating, by the first communication apparatus based on the first CBR service, a first block sequence carrying the first CBR service, the method further comprises:
receiving, by the first communication apparatus, a fourth CBR service; and
the generating, by the first communication apparatus based on the first CBR service, a first block sequence carrying the first CBR service comprises:
generating, by the first communication apparatus based on the first CBR service and the fourth CBR service, the first block sequence carrying the first CBR service and the fourth CBR service, wherein the first block sequence further comprises fourth indication information and a fourth padding area, the fourth indication information indicates that service data is padded in the fourth padding area, the fourth CBR service is padded in the fourth padding area, and a sum of lengths of the fourth padding area and the first padding area is less than the length of the first data block.

14. The method according to any one of claims 2 to 13, wherein before the generating, by the first communication apparatus based on the second CBR service, a second block sequence carrying the second CBR service, the method further comprises:
receiving, by the first communication apparatus, a fifth CBR service; and
the generating, by the first communication apparatus based on the second CBR service, a second block sequence carrying the second CBR service comprises:
generating, by the first communication apparatus based on the second CBR service and the fifth CBR service, the second block sequence carrying the second CBR service and the fifth CBR service, wherein the second block sequence further comprises fifth indication information and a fifth padding area, the fifth indication information indicates that service data is padded in the fifth padding area, the fifth CBR service is padded in the fifth padding area, and a sum of lengths of the fifth padding area and the first padding area is less than the length of the second data block.

15. A communication method, wherein the method comprises:
receiving, by a second communication apparatus, a first block sequence that is sent by a first communication apparatus and that carries a first CBR service, wherein the first block sequence consists of a first start block, M first data blocks, and a first termination block, the first block sequence comprises first indication information and a first padding area, the first indication information indicates that no service data is padded in the first padding area, the first CBR service is not padded in the first padding area, and a length of the first padding area is less than a length of the first data block, wherein M is a positive integer; and
obtaining, by the second communication apparatus, the first CBR service based on the first block sequence.

16. The method according to claim 15, wherein the method further comprises:
receiving, by the second communication apparatus, a second block sequence that is sent by the first communication apparatus and that carries a second CBR service, wherein the second block sequence consists of a second start block, M second data blocks, and a second termination block, the second block sequence comprises second indication information and a second padding area, the second indication information indicates that service data is padded in the second padding area, the second CBR service is padded in the second padding area, and a length of the second padding area is less than a length of the second data block; and
obtaining, by the second communication apparatus, the second CBR service based on the second block sequence.

17. The method according to claim 15 or 16, wherein the obtaining, by the second communication apparatus, the first CBR service based on the first block sequence comprises:
decoding, by the second communication apparatus, the first block sequence, to obtain a first container, wherein the first container comprises first data extracted from the first CBR service, the first indication information, and the first padding area; and
obtaining, by the second communication apparatus, the first CBR service from the first container.

18. The method according to claim 17, wherein the first container comprises a container overhead and a container payload, the container payload comprises the first padding area and the first data, and the container overhead comprises the first indication information.

19. The method according to claim 17, wherein the first container comprises a container overhead and a container payload, the container overhead comprises the first indication information and the first padding area, and the container payload comprises the first data.

20. The method according to claim 18 or 19, wherein the first container further comprises a fixed padding area, a fixed pattern is padded in the fixed padding area, and the fixed padding area does not carry service data.

21. The method according to any one of claims 17 to 20, wherein the M first data blocks carry the first container, and the first start block and the first termination block do not carry the first container.

22. The method according to any one of claims 17 to 20, wherein the M first data blocks and the first termination block carry the first container, and the first start block does not carry the first container.

23. The method according to any one of claims 15 to 22, wherein the second communication apparatus communicates with the first communication apparatus by using a fine-granularity technology.

24. The method according to claim 23, wherein the first block sequence belongs to a first FlexE sub-client; and
the receiving, by a second communication apparatus, a first block sequence that is sent by a first communication apparatus comprises:
obtaining, by the second communication apparatus, the first block sequence from at least one sub-slot that is in an fgBU and that is allocated to the first FlexE sub-client.

25. The method according to claim 23, wherein the first block sequence belongs to a first MTN fg-path; and
the receiving, by a second communication apparatus, a first block sequence that is sent by a first communication apparatus comprises:
obtaining, by the second communication apparatus, the first block sequence from at least one sub-slot that is in an MTN fgBU and that is allocated to the first MTN fg-path.

26. The method according to any one of claims 15 to 25, wherein the first block sequence further carries a third CBR service, the first block sequence further comprises third indication information and a third padding area, the third indication information indicates that no service data is padded in the third padding area, the third CBR service is not padded in the third padding area, and a sum of lengths of the third padding area and the first padding area is less than the length of the first data block; and
the obtaining, by the second communication apparatus, the first CBR service based on the first block sequence comprises:
obtaining, by the second communication apparatus, the first CBR service and the third CBR service based on the first block sequence.

27. The method according to any one of claims 15 to 25, wherein the first block sequence further carries a fourth CBR service, the first block sequence further comprises fourth indication information and a fourth padding area, the fourth indication information indicates that service data is padded in the fourth padding area, the fourth CBR service is padded in the fourth padding area, and a sum of lengths of the fourth padding area and the first padding area is less than the length of the first data block; and
the obtaining, by the second communication apparatus, the first CBR service based on the first block sequence comprises:
obtaining, by the second communication apparatus, the first CBR service and the fourth CBR service based on the first block sequence.

28. The method according to claims 16 to 27, wherein the second block sequence further carries a fifth CBR service, the second block sequence further comprises fifth indication information and a fifth padding area, the fifth indication information indicates that service data is padded in the fifth padding area, the fifth CBR service is padded in the fifth padding area, and a sum of lengths of the fifth padding area and the first padding area is less than the length of the second data block; and
the obtaining, by the second communication apparatus, the second CBR service based on the second block sequence comprises:
obtaining, by the second communication apparatus, the second CBR service and the fifth CBR service based on the second block sequence.

29. A first communication apparatus, wherein the apparatus comprises a transceiver unit and a processing unit, wherein
the transceiver unit is configured to perform a receiving operation and/or a sending operation performed by the first communication apparatus according to any one of claims 1 to 14; and
the processing unit is configured to perform an operation, other than the receiving operation and/or the sending operation, performed by the first communication apparatus according to any one of claims 1 to 14.

30. A second communication apparatus, wherein the apparatus comprises a transceiver unit and a processing unit, wherein
the transceiver unit is configured to perform a receiving operation and/or a sending operation performed by the second communication apparatus according to any one of claims 15 to 28; and
the processing unit is configured to perform an operation, other than the receiving operation and/or the sending operation, performed by the second communication apparatus according to any one of claims 15 to 28.

31. A communication apparatus, wherein the apparatus comprises a communication interface and a processor, and the communication apparatus performs the method according to any one of claims 1 to 28 by using the communication interface and the processor.

32. A computer-readable storage medium, wherein the computer-readable storage medium stores computer-executable instructions; and when the computer-executable instructions are invoked by a computer, the method according to any one of claims 1 to 28 is implemented.

33. A computer program product, comprising a computer program, wherein when the computer program is executed by a processor, the method according to any one of claims 1 to 28 is implemented.

34. A communication system, comprising a first communication apparatus and a second communication apparatus, wherein the first communication apparatus is configured to perform the method according to any one of claims 1 to 14, and the second communication apparatus is configured to perform the method according to any one of claims 15 to 28.
